# EUROPEAN PATENT APPLICATION

(11) **EP 4 808 205 A1**
(43) Date of publication of application: **16.09.2026**
(21) Application number: 24902758.2
(22) Date of filing: 09.12.2024
(51) Int. Cl.: H04W 28/20

(54) **COMMUNICATION METHOD AND RELATED APPARATUS**

(30) Priority: 12.12.2023 CN 202311705949
(71) Applicant: Huawei Technologies Co., Ltd., Shenzhen, Guangdong 518129 (CN)
(72) Inventor: MO, Liguang, Shenzhen, Guangdong 518129 (CN); YAO, Feng, Shenzhen, Guangdong 518129 (CN); MA, Botao, Shenzhen, Guangdong 518129 (CN); ZHANG, Jun, Shenzhen, Guangdong 518129 (CN)
(74) Representative: Isarpatent
(86) International application number: PCT/CN2024/137782
(87) International publication number: WO 2025/124337

(57) **Abstract**

Embodiments of this application provide a communication method and a related apparatus. The method is applied to a first communication device. The method includes: determining a bandwidth splitting ratio of each port of a second communication device; sending first indication information, where the first indication information includes the bandwidth splitting ratio of each port; and receiving traffic-split data from the second communication device. Multi-port transmission between the first communication device and the second communication device is thereby implemented, and bandwidth load balancing across ports of the first communication device is further facilitated, improving communication performance.

## Description

This application claims priority to Chinese Patent Application No. 202311705949.7, filed with the China National Intellectual Property Administration on December 12, 2023 and entitled "COMMUNICATION METHOD AND RELATED APPARATUS", which is incorporated herein by reference in its entirety.

### TECHNICAL FIELD

This application relates to the field of communication technologies, and in particular, to a communication method and a related apparatus.

### BACKGROUND

A distributed unit (distributed unit, DU) and a radio unit (radio unit, RU) can perform data transmission by using the Ethernet common public radio interface (Ethernet common public radio interface, eCPRI) protocol. eCPRI is an interface protocol between the RU and the DU based on Ethernet transmission as defined by the common public radio interface (common public radio interface, CPRI) alliance.

Currently, eCPRI networking is proposed. In eCPRI networking, each RU is directly connected to a DU through a dedicated optical fiber at one end, to implement single-port transmission between the RU and the DU. However, transmission efficiency of eCPRI networking is low, thereby failing to implement multi-port transmission. Therefore, in eCPRI communication, how to implement multi-port transmission is a problem worth considering.

### SUMMARY

This application provides a communication method and a related apparatus, for a first communication device to determine a bandwidth splitting ratio of each port of a second communication device. The first communication device sends first indication information, where the first indication information includes the bandwidth splitting ratio of each port. Then, the first communication device receives traffic-split data from the second communication device. Therefore, the second communication device communicates with the first communication device based on the bandwidth splitting ratio of each port, thereby implementing multi-port transmission between the first communication device and the second communication device. Further, this facilitates bandwidth load balancing across ports of the first communication device or a switch, and improves communication performance.

A first aspect of this application provides a communication method. The method is applied to a first communication device, and the method includes: determining a bandwidth splitting ratio of each port of a second communication device; sending first indication information, where the first indication information includes the bandwidth splitting ratio of each port; and receiving traffic-split data from the second communication device. Therefore, the second communication device communicates with the first communication device based on the bandwidth splitting ratio of each port, thereby implementing multi-port transmission between the first communication device and the second communication device. Further, this facilitates bandwidth load balancing across ports of the first communication device or a switch, and improves communication performance.

According to the first aspect, in a possible implementation, that the first communication device determines the bandwidth splitting ratio of each port of the second communication device includes: The first communication device determines the bandwidth splitting ratio of each port based on one or more of service load of the second communication device, a connection relationship of the second communication device, available bandwidth of each port of the first communication device, and latency of different transmission paths between the second communication device and the first communication device; or the first communication device determines the bandwidth splitting ratio of each port based on one or more of service load of the second communication device, a connection relationship of the second communication device, available bandwidth of each port of a switch, and latency of different transmission paths between the second communication device and the switch, where the switch is directly connected to the first communication device. This facilitates bandwidth load balancing across ports of the first communication device or the switch, reduces communication latency, and improves communication performance.

According to the first aspect, in a possible implementation, the method further includes: The first communication device further determines the bandwidth splitting ratio of each port of the second communication device based on service load of a third communication device and/or a connection relationship of the third communication device. Therefore, the first communication device determines the bandwidth splitting ratio of each port of the second communication device based on service load and/or connection relationships of a plurality of communication devices. This facilitates bandwidth load balancing across ports of the first communication device or the switch.

According to the first aspect, in a possible implementation, the method further includes: The first communication device sends available bandwidth, where the available bandwidth is available bandwidth between the first communication device and the second communication device. Therefore, the first communication device communicates with the second communication device via the available bandwidth, thereby avoiding a case in which the first communication device cannot normally communicate with the second communication device when a link fault occurs.

According to the first aspect, in a possible implementation, the method further includes: The first communication device receives data from the second communication device via the available bandwidth. Therefore, normal communication between the first communication device and the second communication device is implemented, thereby avoiding communication interruption caused by a link fault.

According to the first aspect, in a possible implementation, that the first communication device receives the traffic-split data from the second communication device includes: The first communication device receives the traffic-split data from the second communication device through the third communication device.

According to the first aspect, in a possible implementation, the method further includes: The first communication device receives port information of the second communication device; and the first communication device determines topology information based on port information of the first communication device and the port information of the second communication device, where the topology information includes a connection relationship between the first communication device and the second communication device. Therefore, the first communication device determines the topology information, facilitating bandwidth load balancing across ports of the first communication device or the switch.

According to the first aspect, in a possible implementation, the method further includes: The first communication device receives port information of the third communication device;

That the first communication device determines the topology information based on the port information of the first communication device and the port information of the second communication device includes: The first communication device determines the topology information based on the port information of the first communication device, the port information of the second communication device, and the port information of the third communication device, where the topology information includes respective connection relationships between the first communication device and the second communication device, between the first communication device and the third communication device, and between the second communication device and the third communication device. Therefore, the first communication device determines a topology relationship of entire networking, facilitating bandwidth load balancing across ports of the first communication device or the switch.

According to the first aspect, in a possible implementation, the port information of the second communication device includes an identifier and a type of the second communication device, and an identifier and a port of a communication device connected to each port of the second communication device; and the port information of the third communication device includes an identifier and a type of the third communication device, and an identifier and a port of a communication device connected to each port of the third communication device. Therefore, the first communication device determines a topology relationship of entire networking.

According to the first aspect, in a possible implementation, the port information of the second communication device is carried in a broadcast packet.

According to the first aspect, in a possible implementation, the method further includes: The first communication device receives updated port information of the second communication device, where the updated port information is port information of the second communication device obtained through an update; and the first communication device updates the topology information based on the updated port information of the second communication device. Therefore, the first communication device updates the topology information in a timely manner, so that the first communication device properly allocates a bandwidth proportion based on updated topology information, thereby ensuring bandwidth load balancing and improving communication performance.

A second aspect of this application provides a communication method. The method is applied to a second communication device, and the method includes: receiving first indication information, where the first indication information includes a bandwidth splitting ratio of each port of the second communication device; and sending traffic-split data to a first communication device based on the bandwidth splitting ratio of each port of the second communication device. Multi-port transmission between the first communication device and the second communication device is thereby implemented, and bandwidth load balancing across ports of the first communication device or a switch is further facilitated, improving communication performance.

According to the second aspect, in a possible implementation, the method further includes: The second communication device receives available bandwidth, where the available bandwidth is available bandwidth between the first communication device and the second communication device. Therefore, the first communication device communicates with the second communication device via the available bandwidth, thereby avoiding a case in which the first communication device cannot normally communicate with the second communication device when a link fault occurs.

According to the second aspect, in a possible implementation, the method further includes: The second communication device sends data to the first communication device via the available bandwidth.

According to the second aspect, in a possible implementation, the method further includes: The second communication device sends port information of the second communication device. Therefore, another communication device can determine topology information.

According to the second aspect, in a possible implementation, before the second communication device sends the port information of the second communication device, the method further includes: The second communication device receives, by using a point-to-point topology discovery protocol, port information of a communication device directly connected to the second communication device; and the second communication device determines the port information of the second communication device based on the port information of the communication device directly connected to the second communication device. Therefore, the port information of the second communication device is determined in a point-to-point topology discovery manner, and is sent to another communication device, so that the another communication device can determine the topology information.

According to the second aspect, in a possible implementation, the port information of the second communication device is carried in a broadcast packet.

According to the second aspect, in a possible implementation, the port information of the second communication device includes an identifier and a type of the second communication device, and an identifier and a port of a communication device connected to each port of the second communication device. This helps another communication device accurately determine the topology information.

According to the second aspect, in a possible implementation, the method further includes: The second communication device receives, by using a point-to-point topology discovery protocol, updated port information of a communication device directly connected to the second communication device; the second communication device determines updated port information of the second communication device based on the updated port information of the communication device directly connected to the second communication device, where the updated port information of the second communication device is port information of the second communication device obtained through an update; and the second communication device sends the updated port information of the second communication device. Therefore, another communication device can update the topology information in a timely manner.

According to the second aspect, in a possible implementation, that the second communication device sends the traffic-split data to the first communication device based on the bandwidth splitting ratio of each port of the second communication device includes: The second communication device sends the traffic-split data to the first communication device through a third communication device based on the bandwidth splitting ratio of each port of the second communication device. In this implementation, if the third communication device exists between the second communication device and the first communication device, the second communication device may send data through the third communication device, to implement data transmission with the first communication device.

According to the second aspect, in a possible implementation, the method further includes: The second communication device receives port information of the third communication device; and the second communication device determines topology information based on the port information of the second communication device and the port information of the third communication device, where the topology information includes a connection relationship between the second communication device and the third communication device. The topology information is determined based on port information of another communication device in networking, so that the second communication device determines a topology relationship of the entire networking.

According to the second aspect, in a possible implementation, the method further includes: The second communication device receives, by using a point-to-point topology discovery protocol, port information of a communication device directly connected to the second communication device; and the second communication device determines the port information of the second communication device based on the port information of the communication device directly connected to the second communication device. Therefore, the second communication device determines a device and a port that are connected to a port of the second communication device.

A third aspect of this application provides a communication method. The method is applied to a third communication device, and the method includes: receiving traffic-split data from a second communication device; and when the traffic-split data and to-be-sent data of the third communication device exceed a sending bandwidth capability supported by a port of the third communication device, discarding partial data in the traffic-split data based on the sending bandwidth capability, and sending remaining data in the traffic-split data to a first communication device. Therefore, normal data transmission between the second communication device and the first communication device is implemented.

A fourth aspect of this application provides a communication method. The method is applied to a first communication device, and the method includes: determining a bandwidth splitting ratio of each port of a second communication device; and sending traffic-split data to the second communication device based on the bandwidth splitting ratio of each port of the second communication device. This facilitates downlink bandwidth load balancing across ports of the first communication device and improves communication performance.

According to the fourth aspect, in a possible implementation, that the first communication device determines the bandwidth splitting ratio of each port of the second communication device includes: The first communication device determines the bandwidth splitting ratio of each port of the second communication device based on one or more of service load of the second communication device, a connection relationship of the second communication device, available bandwidth of each port of the first communication device, and latency of different transmission paths between the second communication device and the first communication device; or the first communication device determines the bandwidth splitting ratio of each port based on one or more of service load of the second communication device, a connection relationship of the second communication device, available bandwidth of each port of a switch, and latency of different transmission paths between the second communication device and the switch, where the switch is directly connected to the first communication device. This facilitates bandwidth load balancing across ports of the first communication device or the switch, reduces communication latency, and improves communication performance.

According to the fourth aspect, in a possible implementation, the method further includes: The first communication device further determines the bandwidth splitting ratio of each port based on service load of a third communication device and/or a connection relationship of the third communication device. Therefore, the first communication device determines the bandwidth splitting ratio of each port of the second communication device based on service load and/or connection relationships of a plurality of communication devices. This facilitates bandwidth load balancing across ports of the first communication device.

According to the fourth aspect, in a possible implementation, that the first communication device sends the traffic-split data to the second communication device based on the bandwidth splitting ratio of each port of the second communication device includes: The first communication device sends the traffic-split data to the second communication device through the third communication device based on the bandwidth splitting ratio of each port of the second communication device. In this implementation, if the third communication device exists in a transmission path between the first communication device and the second communication device, the first communication device sends the traffic-split data through the third communication device, to implement data transmission between the first communication device and the second communication device.

According to the fourth aspect, in a possible implementation, the method further includes: The first communication device receives port information of the second communication device; and the first communication device determines topology information based on port information of the first communication device and the port information of the second communication device, where the topology information includes a connection relationship between the first communication device and the second communication device. Therefore, the first communication device determines the topology information, facilitating bandwidth load balancing across ports of the first communication device.

According to the fourth aspect, in a possible implementation, the method further includes: The first communication device receives port information of the third communication device; and that the first communication device determines the topology information based on the port information of the second communication device includes: The first communication device determines the topology information based on the port information of the first communication device, the port information of the second communication device, and the port information of the third communication device, where the topology information includes respective connection relationships between the first communication device and the second communication device, between the first communication device and the third communication device, and between the second communication device and the third communication device. Therefore, the first communication device determines a topology relationship of entire networking, facilitating bandwidth load balancing across ports of the first communication device or the switch.

According to the fourth aspect, in a possible implementation, the port information of the second communication device includes an identifier and a type of the second communication device, and an identifier and a port of a communication device connected to each port of the second communication device; and the port information of the third communication device includes an identifier and a type of the third communication device, and an identifier and a port of a communication device connected to each port of the third communication device. Therefore, the first communication device determines a topology relationship of entire networking.

According to the fourth aspect, in a possible implementation, the port information of the second communication device is carried in a broadcast packet.

According to the fourth aspect, in a possible implementation, the method further includes: The first communication device receives updated port information of the second communication device, where the updated port information is port information of the second communication device obtained through an update; and the first communication device updates the topology information based on the updated port information of the second communication device. Therefore, the first communication device updates the topology information in a timely manner, so that the first communication device properly allocates a bandwidth proportion based on updated topology information, thereby ensuring bandwidth load balancing and improving communication performance.

A fifth aspect of this application provides a communication method. The method is applied to a first communication device, and the method includes: determining a bandwidth splitting ratio of each port of a second communication device; and sending the bandwidth splitting ratio of each port to a switch, where the first communication device is directly connected to the switch. Therefore, the switch communicates with the second communication device, facilitating bandwidth load balancing across ports of the switch and improving communication performance.

According to the fifth aspect, in a possible implementation, that the first communication device determines the bandwidth splitting ratio of each port of the second communication device includes: The first communication device determines the bandwidth splitting ratio of each port based on one or more of service load of the second communication device, a connection relationship of the second communication device, available bandwidth of each port of the switch, and latency of different transmission paths between the switch and the second communication device. This facilitates bandwidth load balancing across ports of the first communication device or the switch, reduces communication latency, and improves communication performance.

A sixth aspect of this application provides a communication method. The method is applied to a switch, and the method includes: receiving a bandwidth splitting ratio of each port of a second communication device from a first communication device; and sending data of the second communication device from the first communication device to the second communication device based on the bandwidth splitting ratio of each port of the second communication device. This implements data transmission between the switch and the second communication device, facilitating bandwidth load balancing across ports of the switch and improving communication performance.

A seventh aspect of this application provides a communication method. The method is applied to a first communication device, and the method includes: sending first information to a second communication device, where the first information indicates a first port of the second communication device, and the first port is a port of the second communication device selected by the first communication device to communicate with the first communication device; and communicating with the second communication device based on a communication address of the first port and a communication address of a second port of the first communication device. Therefore, a communication channel between the first communication device and the second communication device is established, so that the first communication device communicates with the second communication device.

According to the seventh aspect, in a possible implementation, the method further includes: The first communication device receives a first request from the second communication device, where the first request is used to request to allocate a communication address to a port of the second communication device; and the first communication device sends allocation information to the second communication device, where the allocation information includes the communication address of the port of the second communication device. In this implementation, the first communication device allocates a communication address to each port of the second communication device, so that the first communication device communicates with the second communication device through a corresponding port.

According to the seventh aspect, in a possible implementation, the method further includes: The first communication device sends second information to the second communication device, where the second information indicates the communication address of the second port. Therefore, the first communication device communicates with the second communication device through a corresponding port.

An eighth aspect of this application provides a communication method. The method is applied to a second communication device, and the method includes: receiving first information from a first communication device, where the first information indicates a first port of the second communication device, and the first port is a port of the second communication device selected by the first communication device to communicate with the first communication device; and communicating with the first communication device based on a communication address of the first port and a communication address of a second port of the first communication device. Therefore, a communication channel between the first communication device and the second communication device is established, so that the first communication device communicates with the second communication device.

According to the eighth aspect, in a possible implementation, the method further includes: The second communication device sends a first request to the first communication device, where the first request is used to request to allocate a communication address to a port of the second communication device; and the second communication device receives allocation information from the first communication device, where the allocation information includes the communication address allocated to the port of the second communication device. In this implementation, the first communication device allocates a communication address to each port of the second communication device, so that the first communication device communicates with the second communication device through a corresponding port.

According to the eighth aspect, in a possible implementation, the method further includes: The second communication device sends second information to the first communication device, where the second information indicates the communication address of the second port. Therefore, the first communication device communicates with the second communication device through a corresponding port.

A ninth aspect of this application provides a communication method. The method is applied to a first communication device, and the method includes: receiving port information of a second communication device; and determining topology information based on port information of the first communication device and the port information of the second communication device, where the topology information includes a connection relationship between the first communication device and the second communication device. Therefore, the first communication device determines a topology relationship of networking.

According to the ninth aspect, in a possible implementation, the port information of the second communication device includes at least one of the following: an identifier and a type of the second communication device, and an identifier and a port of a communication device connected to each port of the second communication device. Therefore, the first communication device determines a topology relationship of entire networking.

According to the ninth aspect, in a possible implementation, the port information of the second communication device is carried in a broadcast packet.

According to the ninth aspect, in a possible implementation, the method further includes: The first communication device receives port information of a third communication device;

That the first communication device determines the topology information based on the port information of the first communication device and the port information of the second communication device includes: The first communication device determines the topology information based on the port information of the first communication device, the port information of the second communication device, and the port information of the third communication device, where the topology information includes respective connection relationships between the first communication device and the second communication device, between the first communication device and the third communication device, and between the second communication device and the third communication device. Therefore, the first communication device determines a topology relationship of entire networking, facilitating bandwidth load balancing across ports of the first communication device.

According to the ninth aspect, in a possible implementation, the port information of the third communication device includes at least one of the following: an identifier and a type of the third communication device, and an identifier and a port of a communication device connected to each port of the third communication device. Therefore, the first communication device determines a topology relationship of entire networking.

According to the ninth aspect, in a possible implementation, the method further includes: The first communication device receives updated port information of the second communication device, where the updated port information is port information of the second communication device obtained through an update; and the first communication device updates the topology information based on the updated port information of the second communication device. Therefore, the first communication device updates the topology information in a timely manner, so that the first communication device properly allocates a bandwidth proportion based on updated topology information, thereby ensuring bandwidth load balancing and improving communication performance.

A tenth aspect of this application provides a communication method. The method is applied to a second communication device, and the method includes: receiving port information of a third communication device; and determining topology information based on port information of the second communication device and the port information of the third communication device, where the topology information includes a connection relationship between the second communication device and the third communication device. In this implementation, the second communication device determines the topology information based on port information of another communication device in networking, so that the second communication device determines a topology relationship of the entire networking.

According to the tenth aspect, in a possible implementation, the port information of the second communication device includes at least one of the following: an identifier and a type of the second communication device, and an identifier and a port of a communication device connected to each port of the second communication device; and the port information of the third communication device includes at least one of the following: an identifier and a type of the third communication device, and an identifier and a port of a communication device connected to each port of the third communication device. Therefore, the second communication device accurately determines a topology relationship of networking.

According to the tenth aspect, in a possible implementation, the port information of the second communication device is carried in a broadcast packet.

According to the tenth aspect, in a possible implementation, the method further includes: The second communication device receives, by using a point-to-point topology discovery protocol, port information of a communication device directly connected to the second communication device; and the second communication device determines the port information of the second communication device based on the port information of the communication device directly connected to the second communication device. Therefore, the second communication device determines a device and a port that are connected to a port of the second communication device.

According to the tenth aspect, in a possible implementation, the method further includes: The second communication device receives updated port information of the third communication device, where the updated port information is port information of the third communication device obtained through an update; and the second communication device updates the topology information based on the updated port information of the third communication device. Therefore, the second communication device updates the topology information in a timely manner.

An eleventh aspect of this application provides a communication apparatus, including: a processing module, configured to determine a bandwidth splitting ratio of each port of a second communication device; and a transceiver module, configured to: send first indication information, where the first indication information includes the bandwidth splitting ratio of each port; and receive traffic-split data from the second communication device.

According to the eleventh aspect, in a possible implementation, the processing module is specifically configured to: determine the bandwidth splitting ratio of each port based on one or more of service load of the second communication device, a connection relationship of the second communication device, available bandwidth of each port of the communication apparatus, and latency of different transmission paths between the second communication device and the communication apparatus; or determine the bandwidth splitting ratio of each port based on one or more of service load of the second communication device, a connection relationship of the second communication device, available bandwidth of each port of a switch, and latency of different transmission paths between the second communication device and the switch, where the switch is directly connected to the communication apparatus.

According to the eleventh aspect, in a possible implementation, the processing module is further configured to determine the bandwidth splitting ratio of each port of the second communication device based on service load of a third communication device and/or a connection relationship of the third communication device.

According to the eleventh aspect, in a possible implementation, the transceiver module is further configured to send available bandwidth, where the available bandwidth is available bandwidth between the communication apparatus and the second communication device.

According to the eleventh aspect, in a possible implementation, the processing module is further configured to receive data from the second communication device via the available bandwidth.

According to the eleventh aspect, in a possible implementation, the transceiver module is specifically configured to receive the traffic-split data from the second communication device through the third communication device.

According to the eleventh aspect, in a possible implementation, the transceiver module is further configured to receive port information of the second communication device; and the processing module is further configured to determine topology information based on port information of the communication apparatus and the port information of the second communication device, where the topology information includes a connection relationship between the communication apparatus and the second communication device.

According to the eleventh aspect, in a possible implementation, the transceiver module is further configured to receive port information of the third communication device; and the processing module is specifically configured to determine the topology information based on the port information of the communication apparatus, the port information of the second communication device, and the port information of the third communication device, where the topology information includes respective connection relationships between the first communication device and the second communication device, between the first communication device and the third communication device, and between the second communication device and the third communication device.

According to the eleventh aspect, in a possible implementation, the port information of the second communication device includes an identifier and a type of the second communication device, and an identifier and a port of a communication device connected to each port of the second communication device; and the port information of the third communication device includes an identifier and a type of the third communication device, and an identifier and a port of a communication device connected to each port of the third communication device.

According to the eleventh aspect, in a possible implementation, the port information of the second communication device is carried in a broadcast packet.

According to the eleventh aspect, in a possible implementation, the transceiver module is further configured to receive updated port information of the second communication device, where the updated port information is port information of the second communication device obtained through an update; and the processing module is further configured to update the topology information based on the updated port information of the second communication device.

A twelfth aspect of this application provides a communication apparatus, including a transceiver module, configured to: receive first indication information, where the first indication information includes a bandwidth splitting ratio of each port of the communication apparatus; and send traffic-split data to a first communication device based on the bandwidth splitting ratio of each port of the communication apparatus.

According to the twelfth aspect, in a possible implementation, the transceiver module is further configured to receive available bandwidth, where the available bandwidth is available bandwidth between the first communication device and the communication apparatus.

According to the twelfth aspect, in a possible implementation, the transceiver module is further configured to send data to the first communication device via the available bandwidth.

According to the twelfth aspect, in a possible implementation, the transceiver module is further configured to send port information of the communication apparatus.

According to the twelfth aspect, in a possible implementation, the transceiver module is further configured to receive, by using a point-to-point topology discovery protocol, port information of a communication device directly connected to the communication apparatus. The communication apparatus further includes a processing module, and the processing module is configured to determine the port information of the communication apparatus based on the port information of the communication device directly connected to the communication apparatus.

According to the twelfth aspect, in a possible implementation, the port information of the communication apparatus is carried in a broadcast packet.

According to the twelfth aspect, in a possible implementation, the port information of the communication apparatus includes an identifier and a type of the communication apparatus, and an identifier and a port of a communication device connected to each port of the communication apparatus.

According to the twelfth aspect, in a possible implementation, the transceiver module is further configured to receive, by using a point-to-point topology discovery protocol, updated port information of a communication device directly connected to the communication apparatus. The communication apparatus further includes a processing module, and the processing module is configured to determine updated port information of the communication apparatus based on the updated port information of the communication device directly connected to the communication apparatus, where the updated port information of the communication apparatus is port information of the communication apparatus obtained through an update. The transceiver module is further configured to send the updated port information of the communication apparatus.

According to the twelfth aspect, in a possible implementation, the transceiver module is specifically configured to send the traffic-split data to the first communication device through a third communication device based on the bandwidth splitting ratio of each port of the communication apparatus.

According to the twelfth aspect, in a possible implementation, the transceiver module is further configured to receive port information of the third communication device. The communication apparatus further includes a processing module, and the processing module is configured to determine topology information based on port information of the communication apparatus and the port information of the third communication device, where the topology information includes a connection relationship between the communication apparatus and the third communication device.

According to the twelfth aspect, in a possible implementation, the transceiver module is further configured to receive, by using a point-to-point topology discovery protocol, port information of a communication device directly connected to the communication apparatus. The communication apparatus further includes a processing module, and the processing module is configured to determine the port information of the communication apparatus based on the port information of the communication device directly connected to the communication apparatus.

A thirteenth aspect of this application provides a communication apparatus, including: a transceiver module, configured to receive traffic-split data from a second communication device; and a processing module, configured to discard partial data in the traffic-split data when the traffic-split data and to-be-sent data of the communication apparatus exceed a sending bandwidth capability supported by a port of the communication apparatus. The transceiver module is further configured to send remaining data after the discarding to the first communication device.

A fourteenth aspect of this application provides a communication apparatus, including: a processing module, configured to determine a bandwidth splitting ratio of each port of a second communication device; and a transceiver module, configured to send traffic-split data to the second communication device based on the bandwidth splitting ratio of each port of the second communication device.

According to the fourteenth aspect, in a possible implementation, the processing module is specifically configured to: determine the bandwidth splitting ratio of each port of the second communication device based on one or more of service load of the second communication device, a connection relationship of the second communication device, available bandwidth of each port of the communication apparatus, and latency of different transmission paths between the second communication device and the communication apparatus; or determine the bandwidth splitting ratio of each port based on one or more of service load of the second communication device, a connection relationship of the second communication device, available bandwidth of each port of a switch, and latency of different transmission paths between the second communication device and the switch, where the switch is directly connected to the communication apparatus.

According to the fourteenth aspect, in a possible implementation, the processing module is further configured to determine the bandwidth splitting ratio of each port based on service load of a third communication device and/or a connection relationship of the third communication device.

According to the fourteenth aspect, in a possible implementation, the transceiver module is specifically configured to send the traffic-split data to the second communication device through the third communication device based on the bandwidth splitting ratio of each port of the second communication device.

According to the fourteenth aspect, in a possible implementation, the transceiver module is further configured to receive port information of the second communication device; and the processing module is further configured to determine topology information based on port information of the communication apparatus and the port information of the second communication apparatus, where the topology information includes a connection relationship between the communication apparatus and the second communication device.

According to the fourteenth aspect, in a possible implementation, the transceiver module is further configured to receive port information of the third communication device; and the processing module is further configured to determine the topology information based on the port information of the communication apparatus, the port information of the second communication device, and the port information of the third communication device, where the topology information includes respective connection relationships between the first communication device and the second communication device, between the first communication device and the third communication device, and between the second communication device and the third communication device.

According to the fourteenth aspect, in a possible implementation, the port information of the second communication device includes an identifier and a type of the second communication device, and an identifier and a port of a communication device connected to each port of the second communication device; and the port information of the third communication device includes an identifier and a type of the third communication device, and an identifier and a port of a communication device connected to each port of the third communication device.

According to the fourteenth aspect, in a possible implementation, the port information of the second communication device is carried in a broadcast packet.

According to the fourteenth aspect, in a possible implementation, the transceiver module is further configured to receive updated port information of the second communication device, where the updated port information is port information of the second communication device obtained through an update; and the processing module is further configured to update the topology information based on the updated port information of the second communication device.

A fifteenth aspect of this application provides a communication apparatus, including: a processing module, configured to determine a bandwidth splitting ratio of each port of a second communication device; and a transceiver module, configured to send the bandwidth splitting ratio of each port to a switch, where the communication apparatus is directly connected to the switch.

According to the fifteenth aspect, in a possible implementation, the processing module is specifically configured to determine the bandwidth splitting ratio of each port based on one or more of service load of the second communication device, a connection relationship of the second communication device, available bandwidth of each port of the switch, and latency of different transmission paths between the switch and the second communication device.

A sixteenth aspect of this application provides a communication apparatus, including: a transceiver module, configured to receive a bandwidth splitting ratio of each port of a second communication device from a first communication device; and send data of the second communication device from the first communication device to the second communication device based on the bandwidth splitting ratio of each port of the second communication device.

A seventeenth aspect of this application provides a communication apparatus, including: a transceiver module, configured to send first information to a second communication device, where the first information indicates a first port of the second communication device, and the first port is a port of the second communication device selected by the communication apparatus to communicate with the communication apparatus; and a processing module, configured to communicate with the second communication device based on a communication address of the first port and a communication address of a second port of the communication apparatus.

According to the seventeenth aspect, in a possible implementation, the transceiver module is further configured to: receive a first request from the second communication device, where the first request is used to request to allocate a communication address to a port of the second communication device; and send allocation information to the second communication device, where the allocation information includes the communication address of the port of the second communication device.

According to the seventeenth aspect, in a possible implementation, the transceiver module is further configured to send second information to the second communication device, where the second information indicates the communication address of the second port.

An eighteenth aspect of this application provides a communication apparatus, including: a transceiver module, configured to receive first information from a first communication device, where the first information indicates a first port of the communication apparatus, and the first port is a port of the communication apparatus selected by the first communication device to communicate with the first communication device; and a processing module, configured to communicate with the first communication device based on a communication address of the first port and a communication address of a second port of the first communication device.

According to the eighteenth aspect, in a possible implementation, the transceiver module is further configured to: send a first request to the first communication device, where the first request is used to request to allocate a communication address to a port of the communication apparatus; and receive allocation information from the first communication device, where the allocation information includes the communication address allocated to the port of the communication apparatus.

According to the eighteenth aspect, in a possible implementation, the transceiver module is further configured to send second information to the first communication device, where the second information indicates the communication address of the second port.

A nineteenth aspect of this application provides a communication apparatus, including: a transceiver module, configured to receive port information of a second communication device; and a processing module, configured to determine topology information based on port information of the communication apparatus and the port information of the second communication device, where the topology information includes a connection relationship between the communication apparatus and the second communication device.

According to the nineteenth aspect, in a possible implementation, the port information of the second communication device includes at least one of the following: an identifier and a type of the second communication device, and an identifier and a port of a communication device connected to each port of the second communication device.

According to the nineteenth aspect, in a possible implementation, the port information of the second communication device is carried in a broadcast packet.

According to the nineteenth aspect, in a possible implementation, the transceiver module is further configured to receive port information of a third communication device; and the processing module is specifically configured to determine the topology information based on the port information of the communication apparatus, the port information of the second communication device, and the port information of the third communication device, where the topology information includes respective connection relationships between the first communication device and the second communication device, between the first communication device and the third communication device, and between the second communication device and the third communication device.

According to the nineteenth aspect, in a possible implementation, the port information of the third communication device includes at least one of the following: an identifier and a type of the third communication device, and an identifier and a port of a communication device connected to each port of the third communication device.

According to the nineteenth aspect, in a possible implementation, the transceiver module is further configured to receive updated port information of the second communication device, where the updated port information is port information of the second communication device obtained through an update; and the processing module is further configured to update the topology information based on the updated port information of the second communication device.

A twentieth aspect of this application provides a communication apparatus, including: a transceiver module, configured to receive port information of a third communication device; and a processing module, configured to determine topology information based on port information of the communication apparatus and the port information of the third communication device, where the topology information includes a connection relationship between the communication apparatus and the third communication device.

According to the twentieth aspect, in a possible implementation, the port information of the communication apparatus includes at least one of the following: an identifier and a type of the communication apparatus, and an identifier and a port of a communication device connected to each port of the communication apparatus; and the port information of the third communication device includes at least one of the following: an identifier and a type of the third communication device, and an identifier and a port of a communication device connected to each port of the third communication device.

According to the twentieth aspect, in a possible implementation, the port information of the communication apparatus is carried in a broadcast packet.

According to the twentieth aspect, in a possible implementation, the transceiver module is further configured to receive, by using a point-to-point topology discovery protocol, port information of a communication device directly connected to the communication apparatus; and the processing module is further configured to determine the port information of the communication apparatus based on the port information of the communication device directly connected to the communication apparatus.

According to the twentieth aspect, in a possible implementation, the transceiver module is further configured to receive updated port information of the third communication device, where the updated port information is port information of the third communication device obtained through an update; and the processing module is further configured to update the topology information based on the updated port information of the third communication device.

A twenty-first aspect of this application provides a communication apparatus. The communication apparatus includes a processor and a memory. The memory stores a computer program or computer instructions, and the processor is configured to: invoke and run the computer program or the computer instructions stored in the memory, to enable the processor to implement any one of the implementations of any one of the first aspect to the tenth aspect.

Optionally, the communication apparatus further includes a transceiver, and the processor is configured to control the transceiver to receive and send a signal.

A twenty-second aspect of this application provides a communication apparatus, including a processor and an interface circuit. The processor is configured to: communicate with another apparatus through the interface circuit, and perform the method according to any one of the first aspect to the tenth aspect. There are one or more processors.

A twenty-third aspect of this application provides a communication apparatus, including a processor, configured to connect to a memory, and configured to invoke a program stored in the memory, to perform the method according to any one of the first aspect to the tenth aspect. The memory may be located inside the communication apparatus, or may be located outside the communication apparatus. In addition, there are one or more processors.

In an implementation, the communication apparatuses in the eleventh aspect to the twentieth aspect may be chips or chip systems.

A twenty-fourth aspect of this application provides a communication apparatus, including at least one logic circuit and an input/output interface. The logic circuit is configured to perform the method according to any one of the possible implementations of any one of the first aspect to the tenth aspect.

A twenty-fifth aspect of this application provides a computer program product including computer instructions. When the computer program product runs on a computer, the computer is enabled to perform any one of the implementations of any one of the first aspect to the tenth aspect.

A twenty-sixth aspect of this application provides a computer-readable storage medium, including computer instructions. When the instructions are run on a computer, the computer is enabled to perform any one of the implementations of any one of the first aspect to the tenth aspect.

A twenty-seventh aspect of this application provides a chip apparatus, including a processor, configured to invoke a computer program or computer instructions in a memory, to enable the processor to perform any one of the implementations of any one the first aspect to the tenth aspect.

Optionally, the processor is coupled to the memory through an interface.

A twenty-eighth aspect of this application provides a communication system. The communication system includes a first communication device and a second communication device, the first communication device is configured to perform the method shown in the first aspect, and the second communication device is configured to perform the method shown in the second aspect. Optionally, the communication system further includes a third communication device, and the third communication device is configured to perform the method shown in the third aspect. Alternatively, the communication system includes a first communication device and a switch, the first communication device is configured to perform the method shown in the fifth aspect, and the switch is configured to perform the method shown in the sixth aspect. Alternatively, the communication system includes a first communication device and a second communication device, the first communication device is configured to perform the method shown in the seventh aspect, and the second communication device is configured to perform the method shown in the eighth aspect.

It can be learned from the foregoing technical solutions that the method provided in this application is applied to the first communication device. The method includes: determining the bandwidth splitting ratio of each port of the second communication device; sending the first indication information, where the first indication information includes the bandwidth splitting ratio of each port; and then receiving the traffic-split data from the second communication device. Multi-port transmission between the first communication device and the second communication device is thereby implemented, and bandwidth load balancing across ports of the first communication device or the switch is further facilitated, improving communication performance.

### BRIEF DESCRIPTION OF DRAWINGS

FIG. 1 is a diagram of a structure of eCPRI networking according to an embodiment of this application;
FIG. 2 is a diagram of another structure of eCPRI networking according to an embodiment of this application;
FIG. 3 is a diagram of an embodiment of a communication method according to an embodiment of this application;
FIG. 4 is a diagram of a scenario of a communication method according to an embodiment of this application;
FIG. 5 is a diagram of another embodiment of a communication method according to embodiments of this application;
FIG. 6 is a diagram of another scenario of a communication method according to an embodiment of this application;
FIG. 7 is a diagram of another embodiment of a communication method according to an embodiment of this application;
FIG. 8 is a diagram of another embodiment of a communication method according to an embodiment of this application;
FIG. 9 is a diagram of another scenario of a communication method according to an embodiment of this application;
FIG. 10 is a diagram of another embodiment of a communication method according to an embodiment of this application;
FIG. 11 is a diagram of another embodiment of a communication method according to an embodiment of this application;
FIG. 12 is a diagram of another scenario of a communication method according to an embodiment of this application;
FIG. 13 is a diagram of another embodiment of a communication method according to an embodiment of this application;
FIG. 14 is a diagram of a structure of a communication apparatus according to an embodiment of this application;
FIG. 15 is a diagram of another structure of a communication apparatus according to an embodiment of this application;
FIG. 16 is a diagram of another structure of a communication apparatus according to an embodiment of this application; and
FIG. 17 is a diagram of another structure of a communication apparatus according to an embodiment of this application.

### DESCRIPTION OF EMBODIMENTS

Embodiments of this application provide a communication method and a related apparatus, for a first communication device to determine a bandwidth splitting ratio of each port of a second communication device. The first communication device sends first indication information, where the first indication information includes the bandwidth splitting ratio of each port. Then, the first communication device receives traffic-split data from the second communication device. Therefore, the second communication device communicates with the first communication device based on the bandwidth splitting ratio of each port, thereby implementing multi-port transmission between the first communication device and the second communication device. Further, this facilitates bandwidth load balancing across ports of the first communication device or the switch, and improves communication performance.

The following clearly and completely describes the technical solutions in embodiments of this application with reference to the accompanying drawings in embodiments of this application. It is clear that the described embodiments are merely some but not all of embodiments of this application. All other embodiments obtained by a person skilled in the art based on embodiments of this application without creative efforts shall fall within the protection scope of this application.

The term "and/or" in this application describes only an association relationship for describing associated objects and represents that three relationships may exist. For example, A and/or B may represent the following three cases: Only A exists, both A and B exist, and only B exists. In addition, the character "/" in this application generally indicates an "or" relationship between the associated objects.

The technical solutions in this application may be applied to various communication systems, for example, a 5th generation (5th generation, 5G) mobile communication system, a new radio (new radio, NR) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a mobile communication system (for example, a 6G mobile communication system) after a 5G network, a vehicle-to-everything (vehicle-to-everything, V2X) communication system, a device-to-device (device-to-device, D2D) communication system, an internet of things communication system, an industrial internet communication system, or a satellite communication system.

A distributed unit (distributed unit, DU) and a radio unit (radio unit, RU) can perform data transmission by using the Ethernet common public radio interface (Ethernet common public radio interface, eCPRI) protocol. eCPRI is an interface protocol between the RU and the DU based on Ethernet transmission as defined by the common public radio interface (common public radio interface, CPRI) alliance. Currently, eCPRI networking is proposed. In eCPRI networking, each RU is directly connected to a DU through a dedicated optical fiber at one end, to implement single-port transmission between the RU and the DU. However, transmission efficiency of eCPRI networking is low, thereby failing to implement multi-port transmission. Therefore, in eCPRI communication, how to implement multi-port transmission is a problem worth considering.

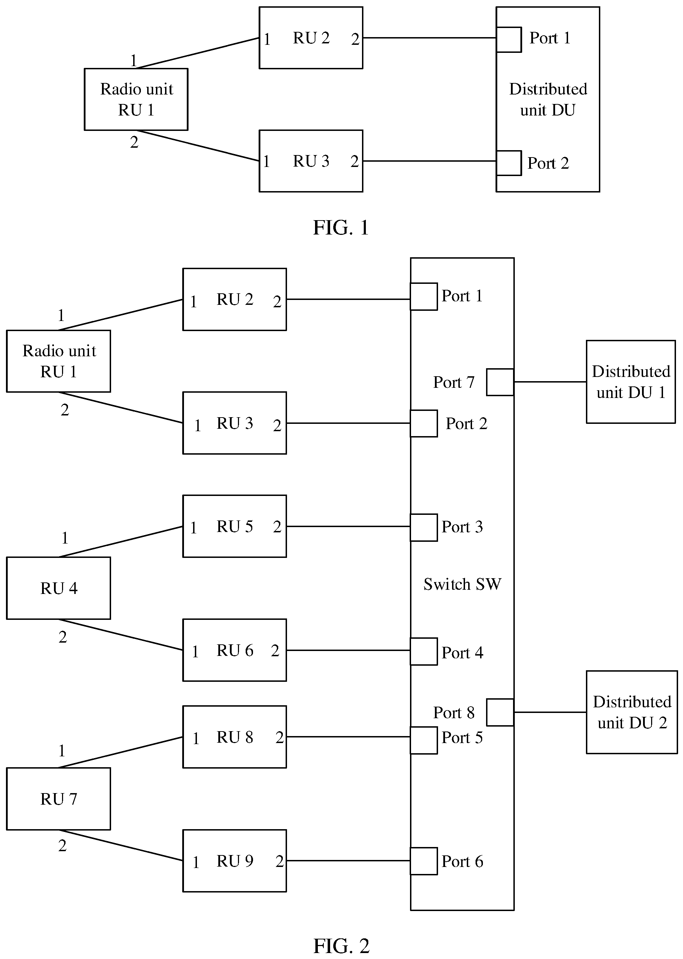

This application provides eCPRI networking. The following describes a structure of the eCPRI networking by using FIG. 1 and FIG. 2 as an example.

FIG. 1 is a diagram of a structure of eCPRI networking according to an embodiment of this application. Refer to FIG. 1. The eCPRI networking includes an RU 1, an RU 2, an RU 3, and a DU. In the eCPRI networking, the DU is connected to one or more RUs in a ring shape. As shown in FIG. 1, one port of the RU 1 is connected to one port of the RU 2, and the other port of the RU 1 is connected to one port of the RU 3. The other port of the RU 2 is connected to a port 1 of the DU, and the other port of the RU 3 is connected to a port 2 of the DU. Therefore, multi-port transmission between the DU and the RU is implemented.

It should be noted that FIG. 1 is merely an example of eCPRI networking. In actual application, the eCPRI networking may include a DU and at least one RU, and the DU is connected to the at least one RU in a ring shape. This is not specifically limited in this application.

FIG. 2 is a diagram of another structure of eCPRI networking according to an embodiment of this application. Refer to FIG. 2. The eCPRI networking includes an RU 1, an RU 2, an RU 3, an RU 4, an RU 5, an RU 6, an RU 7, an RU 8, an RU 9, a switch, a DU 1, and a DU 2. In the eCPRI networking, the switch is connected to one or more RUs in a ring shape. As shown in FIG. 2, the DU 1 controls the RU 1 to the RU 3 and the RU 4 to the RU 6. One port of the RU 1 is connected to one port of the RU 2, and the other port of the RU 1 is connected to one port of the RU 3. The other port of the RU 2 is connected to a port 1 of the switch, the other port of the RU 3 is connected to a port 2 of the switch, and one port of the DU 1 is connected to a port 7 of the switch. That is, the RU 1 to the RU 3 form ring networking with the switch. Similarly, the RU 4 to the RU 6 form ring networking with the switch. The DU 2 controls the RU 7 to the RU 9, and the RU 7 to the RU 9 form ring networking with the switch. Therefore, multi-port transmission between the DU and the RU is implemented.

It should be noted that FIG. 2 is merely an example of eCPRI networking. In actual application, the eCPRI networking may include a DU, a switch, and at least one RU. The DU is connected to the at least one RU in a ring shape. This is not specifically limited in this application.

It should be noted that different devices in the eCPRI networking shown in FIG. 1 and FIG. 2 may be connected through an optical fiber or a cable. This is not specifically limited in this application.

It should be noted that the DU and the RU may be network units included in a network device. The network device may be a device in a wireless network. For example, the network device may be a radio access network (radio access network, RAN) node (or device) that connects a terminal device to the wireless network, and may also be referred to as a base station. Examples of some RAN devices are a next generation NodeB (next generation NodeB, gNodeB) in a 5G communication system, a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), and a home base station (for example, a home evolved NodeB, or a home NodeB, HNB).

In another possible scenario, a plurality of RAN nodes coordinate to assist the terminal in implementing radio access, and different RAN nodes separately implement some functions of a base station. For example, the RAN node may be a central unit (central unit, CU), a distributed unit (distributed unit, DU), a CU-control plane (control plane, CP), a CU-user plane (user plane, UP), or a radio unit (radio unit, RU). The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

It should be noted that a name of the DU and a name of the RU are merely names used in a current communication system, and the name of the DU and the name of the RU may change with evolution of a communication protocol. This is not limited in this application. The DU and the RU in this application may be considered provided that there is a similar corresponding function. In this application, a first communication device may be a DU, and both a second communication device and a third communication device may be RUs. It should be noted that a specific name of the first communication device is not limited, and may specifically change with the name of the DU. A specific name of the second communication device is not limited, and may specifically change with the name of the DU.

The following describes the technical solutions of this application with reference to specific embodiments.

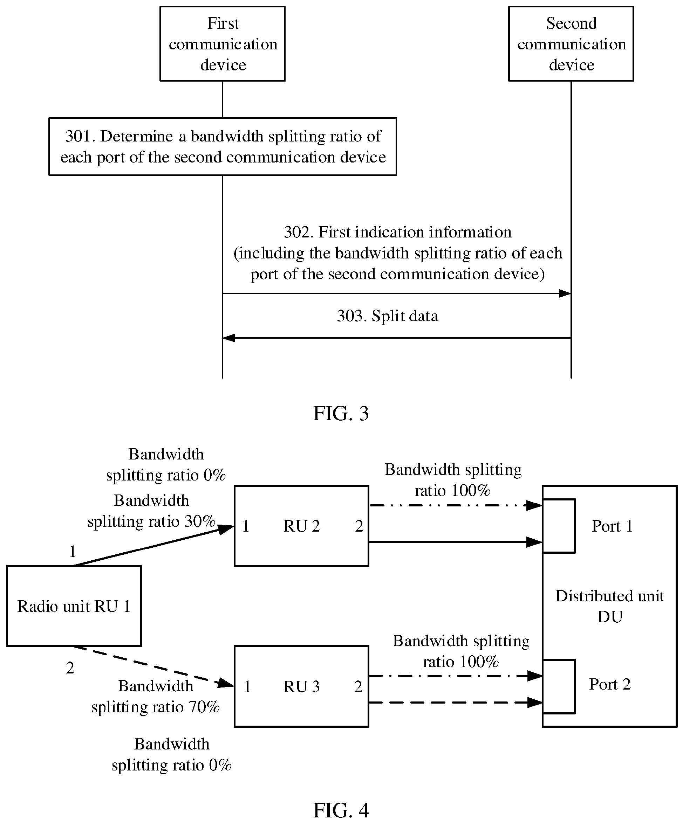

The following describes, with reference to an embodiment shown in FIG. 3, a process in which a first communication device determines a bandwidth splitting ratio of each port of a second communication device for the second communication device, facilitating uplink bandwidth load balancing across ports of the first communication device or a switch. FIG. 3 is a diagram of an embodiment of a communication method according to an embodiment of this application. Refer to FIG. 3. The method includes the following steps.

301. A first communication device determines a bandwidth splitting ratio of each port of a second communication device.

For example, as shown in FIG. 4, the first communication device is a DU, and the second communication device is an RU 1. The RU 1 includes a port 1 and a port 2. The DU determines that a bandwidth splitting ratio of the port 1 of the RU 1 is 30%, that is, the RU 1 sends 30% of data of the RU 1 through the port 1 of the RU 1 to a port 1 of the DU. The DU determines that a bandwidth splitting ratio of the port 2 of the RU 1 is 70%, that is, the RU 1 sends 70% of data of the RU 1 through the port 2 of the RU 1 to a port 2 of the DU.

Descriptions are provided in this embodiment mainly by using an example in which the first communication device determines the bandwidth splitting ratio of each port of the second communication device. The same is true to a process of determining a bandwidth splitting ratio of each port of another communication device. For details, refer to related descriptions in this embodiment. For example, as shown in FIG. 4, the DU may determine that a bandwidth splitting ratio of a port 1 of an RU 2 is 0 and a bandwidth splitting ratio of a port 2 of the RU 2 is 100%. The DU may determine that a bandwidth splitting ratio of a port 1 of an RU 3 is 0 and a bandwidth splitting ratio of a port 2 of the RU 3 is 100%.

In a possible implementation, the first communication device determines the bandwidth splitting ratio of each port of the second communication device based on one or more of service load of the second communication device, a connection relationship of the second communication device, available bandwidth of each port of the first communication device, and latency of different transmission paths between the second communication device and the first communication device.

The connection relationship of the second communication device includes a connection relationship between the first communication device and the second communication device and/or a connection relationship between the second communication device and another communication device. The connection relationship between the first communication device and the second communication device includes a connection relationship between a port of the first communication device and a port of the second communication device. The connection relationship between the second communication device and the another second communication device includes a connection relationship between a port of the second communication device and a port of the another second communication device. For example, as shown in FIG. 4, the second communication device is an RU 1, and the another communication device includes an RU 2 and an RU 3. A connection relationship of the RU 1 includes a connection relationship between the RU 1 and the RU 2 and a connection relationship between the RU 1 and the RU 3. For another example, as shown in FIG. 4, the second communication device is an RU 2, and the another communication device includes an RU 1. A connection relationship of the RU 2 includes a connection relationship between the RU 2 and the RU 1 and a connection relationship between the RU 2 and a DU.

For example, as shown in FIG. 4, the first communication device is a DU, the DU includes a port 1 and a port 2, and available bandwidth of each port of the first communication device includes available bandwidth of the port 1 of the DU and available bandwidth of the port 2 of the DU. The second communication device is an RU 1, and there are two transmission paths between the RU 1 and the DU, including a transmission path: the RU 1 -> an RU 3 -> the DU and a transmission path: the RU 1 -> an RU 2 -> the DU.

In this implementation, the first communication device determines the bandwidth splitting ratio of each port of the second communication device based on the service load of the second communication device and the connection relationship of the second communication device. In actual application, in the eCPRI networking, if there are more communication devices, the first communication device may determine the bandwidth splitting ratio of each port of the second communication device based on service load and connection relationships of the more communication devices. For example, optionally, the first communication device further determines the bandwidth splitting ratio of each port of the second communication device based on service load of a third communication device and/or a connection relationship of the third communication device. The connection relationship of the third communication device includes a connection relationship between the third communication device and the first communication device and/or a connection relationship between the third communication device and the second communication device. For example, as shown in FIG. 4, the first communication device is a DU, the second communication device is an RU 1, and the third communication device is an RU 2. The connection relationship of the third communication device includes a connection relationship between the RU 2 and the DU and a connection relationship between the RU 2 and the RU 1.

For eCPRI networking shown in FIG. 4, the DU may determine a bandwidth splitting ratio of each port of the RU 1, a bandwidth splitting ratio of each port of the RU 2, and a bandwidth splitting ratio of each port of the RU 3 based on service load of the RU 1, a connection relationship of the RU 1, latency of different transmission paths between the RU 1 and the DU, service load of the RU 2, a connection relationship of the RU 2, latency of different transmission paths between the RU 2 and the DU, service load of the RU 3, a connection relationship of the RU 3, latency of different transmission paths between the RU 3 and the DU, and available bandwidth of each port of the DU. For example, as shown in FIG. 4, it can be learned that a bandwidth splitting ratio of a port 1 of the RU 1 is 30%, and a bandwidth splitting ratio of a port 2 of the RU 1 is 70%; a bandwidth splitting ratio of a port 1 of the RU 2 is 0%, and a bandwidth splitting ratio of a port 2 of the RU 2 is 100%; and a bandwidth splitting ratio of a port 1 of the RU 3 is 0%, and a bandwidth splitting ratio of a port 2 of the RU 3 is 100%.

In another possible implementation, the first communication device determines the bandwidth splitting ratio of each port of the second communication device based on one or more of service load of the second communication device, a connection relationship of the second communication device, available bandwidth of each port of a switch, and latency of different transmission paths between the second communication device and the switch, where the switch is directly connected to the first communication device.

The connection relationship of the second communication device includes a connection relationship between the switch and the second communication device and/or a connection relationship between the second communication device and another communication device. For example, as shown in FIG. 2, the second communication device is an RU 1, the another communication device includes an RU 2 and an RU 3. The connection relationship of the second communication device includes a connection relationship between the RU 1 and the RU 2 and a connection relationship between the RU 1 and the RU 3. For another example, as shown in FIG. 2, the second communication device is an RU 2, and the another communication device is an RU 1. The connection relationship of the second communication device includes a connection relationship between the RU 2 and the RU 1 and a connection relationship between the RU 2 and the switch. As shown in FIG. 2, the first communication device is a DU 1, and the available bandwidth of each port of the switch may include available bandwidth of a port 1 of the switch and available bandwidth of a port 2 of the switch. The second communication device is an RU 1, and the different transmission paths between the second communication device and the switch include transmission paths between the RU 1 and the switch, which are specifically a transmission path: the RU 1 -> an RU 2 -> the switch and a transmission path: the RU 1 -> an RU 3 -> the switch.

In this implementation, the first communication device determines the bandwidth splitting ratio of each port of the second communication device based on service load and a connection relationship of a third communication device. In actual application, in the eCPRI networking, if there are more communication devices, the first communication device may determine the bandwidth splitting ratio of each port of the second communication device based on service load and connection relationships of the more communication devices. Optionally, the first communication device further determines the bandwidth splitting ratio of each port of the second communication device based on service load of a third communication device and/or a connection relationship of the third communication device. The connection relationship of the third communication device includes a connection relationship between the third communication device and the switch and/or a connection relationship between the third communication device and the second communication device. For example, as shown in FIG. 2, the first communication device is a DU 1, the second communication device is an RU 1, and the third communication device is an RU 2. The connection relationship of the third communication device includes a connection relationship between the RU 2 and the switch and a connection relationship between the RU 2 and the RU 1.

For eCPRI networking shown in FIG. 2, the DU may determine a bandwidth splitting ratio of each port of the RU 1, a bandwidth splitting ratio of each port of the RU 2, and a bandwidth splitting ratio of each port of the RU 3 based on service load of the RU 1, a connection relationship of the RU 1, latency of different transmission paths between the RU 1 and the switch, service load of the RU 2, a connection relationship of the RU 2, latency of different transmission paths between the RU 2 and the switch, service load of the RU 3, a connection relationship of the RU 3, latency of different transmission paths between the RU 3 and the switch, and available bandwidth corresponding to each of a port 1 and a port 2 of the switch.

302. The first communication device sends first indication information to the second communication device, where the first indication information includes the bandwidth splitting ratio of each port of the second communication device; and correspondingly, the second communication device receives the first indication information from the first communication device.

Optionally, the first communication device sends the first indication information to the second communication device through the third communication device and/or the switch. For example, as shown in FIG. 4, the first communication device is a DU, the second communication device is an RU 1, and the third communication device is an RU 2. The DU sends the first indication information to the RU 1 through the RU 2. For another example, as shown in FIG. 2, the first communication device is a DU, the second communication device is an RU 1, and the third communication device is an RU 2. The DU sends the first indication information to the RU 1 through the RU 2 and the switch. It should be noted that in actual application, the first communication device may send the first indication information to the second communication device through one or more third communication devices. This needs to be specifically determined based on a quantity of third communication devices included in a transmission path between the first communication device and the second communication device.

303. The second communication device sends traffic-split data to the first communication device based on the bandwidth splitting ratio of each port of the second communication device; and correspondingly, the first communication device receives the traffic-split data from the second communication device.

Optionally, the second communication device sends the traffic-split data to the first communication device through the third communication device and/or the switch based on the bandwidth splitting ratio of each port of the second communication device. For example, as shown in FIG. 4, the first communication device is a DU, the second communication device is an RU 1, and the third communication device includes an RU 2 and an RU 3. The RU 1 sends one part of the traffic-split data to the DU through the RU 2 based on a bandwidth splitting ratio of a port 1 of the RU 1, and the RU 1 sends the other part of the traffic-split data to the DU through the RU 3 based on a bandwidth splitting ratio of a port 2 of the RU 1. For another example, as shown in FIG. 2, the first communication device is a DU, the second communication device is an RU 1, and the third communication device includes an RU 2 and an RU 3. The RU 1 sends the traffic-split data to the switch. The switch sends one part of the traffic-split data to the RU 1 through the RU 2 based on a bandwidth splitting ratio of a port 1 of the RU 1, and the switch sends the other part of the traffic-split data to the RU 2 through the RU 3 based on a bandwidth splitting ratio of a port 2 of the RU 1.

It should be noted that in actual application, the second communication device may send the traffic-split data to the first communication device through one or more third communication device. This needs to be specifically determined based on a quantity of third communication devices included in a plurality of transmission paths between the first communication device (or the switch) and the second communication device.

Optionally, when a total data amount of the traffic-split data and to-be-sent data of the third communication device exceeds a sending bandwidth capability supported by a port of the third communication device, the third communication device discards partial data in the traffic-split data based on the sending bandwidth capability, and sends remaining data in the traffic-split data to the first communication device. Optionally, the third communication device may discard, based on the sending bandwidth capability, partial data with a low priority that corresponds to each of the traffic-split data and the to-be-sent data. Therefore, a data sum of remaining data in the to-be-sent data and the remaining data in the traffic-split data is not greater than a sending data amount supported by the port of the third communication device. For example, as shown in FIG. 4, the first communication device is a DU, the second communication device is an RU 1, and the third communication device is an RU 2. The RU 2 receives the traffic-split data from a port 1 of the RU 1. If a total data amount of to-be-sent data of the RU 2 and the traffic-split data of the RU 1 exceeds a sending bandwidth capability supported by a port 2 of the RU 2, the RU 2 may discard partial data in the traffic-split data of the RU 1, and then send remaining data in the traffic-split data to the DU.

In this embodiment of this application, the first communication device determines the bandwidth splitting ratio of each port of the second communication device; the first communication device sends the first indication information, where the first indication information includes the bandwidth splitting ratio of each port; and then the first communication device receives the traffic-split data from the second communication device. Therefore, the second communication device communicates with the first communication device based on the bandwidth splitting ratio of each port, thereby implementing multi-port transmission between the first communication device and the second communication device. Further, this facilitates bandwidth load balancing across ports of the first communication device or the switch, reduces communication latency, and improves communication performance.

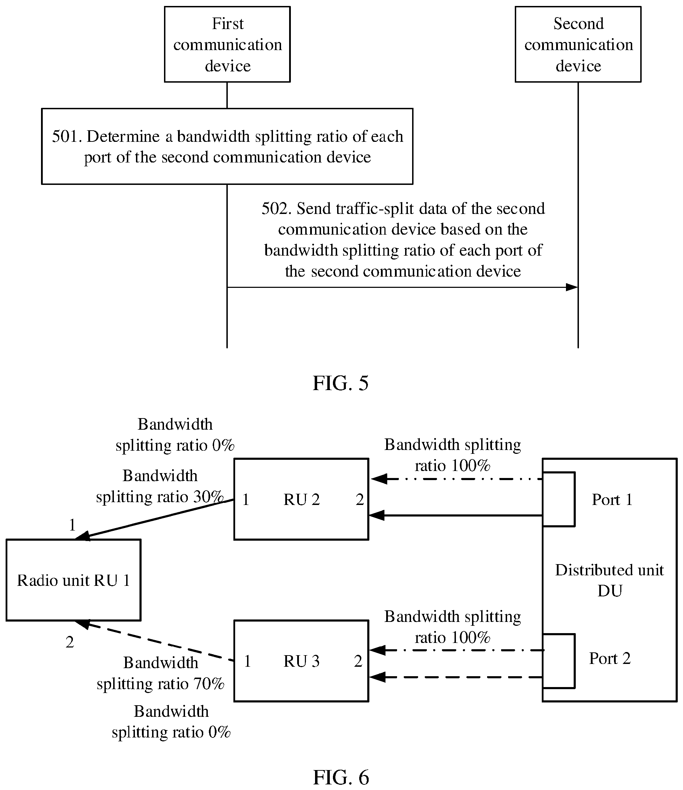

The following describes, with reference to an embodiment shown in FIG. 5, a process in which a first communication device determines a bandwidth splitting ratio of each port of a second communication device for the second communication device, facilitating downlink bandwidth load balancing across ports of the first communication device. FIG. 5 is a diagram of another embodiment of a communication method according to embodiments of this application. Refer to FIG. 5. The method includes the following steps.

501. A first communication device determines a bandwidth splitting ratio of each port of a second communication device.

Step 501 is similar to step 301 in the embodiment shown in FIG. 3. For details, refer to related descriptions of step 301 in the embodiment shown in FIG. 3.

502. The first communication device sends traffic-split data of the second communication device to the second communication device based on the bandwidth splitting ratio of each port of the second communication device.

Optionally, the first communication device sends the traffic-split data to the second communication device through the third communication device based on the bandwidth splitting ratio of each port of the second communication device. For example, as shown in FIG. 6, the first communication device is a DU, the second communication device is an RU 1, and the third communication device includes an RU 2 and an RU 3. The DU sends one part of the traffic-split data of the RU 1 to the RU 1 through the RU 2 based on a bandwidth splitting ratio of a port 1 of the RU 1, and sends the other part of the traffic-split data of the RU 1 to the RU 1 through the RU 3 based on a bandwidth splitting ratio of a port 2 of the RU 1.

It should be noted that in actual application, the first communication device may send the traffic-split data to the second communication device through one or more third communication device. This needs to be specifically determined based on a quantity of third communication devices included in a plurality of transmission paths between the first communication device and the second communication device.

In this embodiment of this application, the first communication device determines the bandwidth splitting ratio of each port of the second communication device. Then, the first communication device sends the traffic-split data of the second communication device to the second communication device based on the bandwidth splitting ratio of each port of the second communication device. Multi-port transmission between the first communication device and the second communication device is thereby implemented, and bandwidth load balancing across ports of the first communication device is further facilitated, improving communication latency.

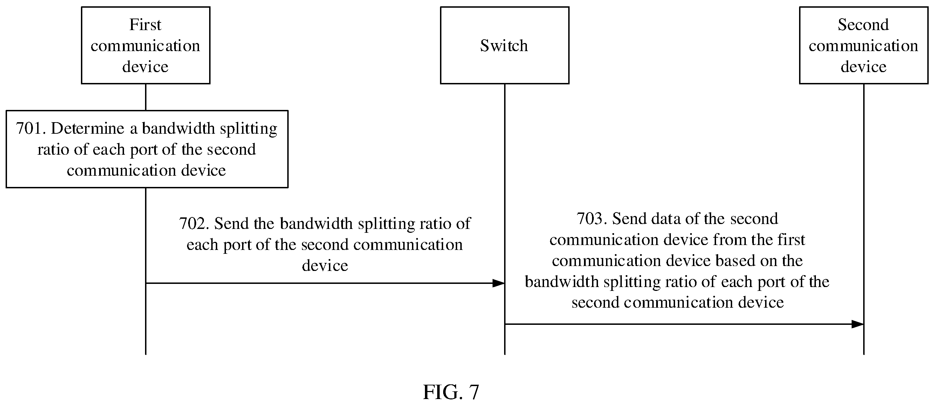

The following describes, with reference to an embodiment shown in FIG. 7, a process in which a first communication device determines a bandwidth splitting ratio of each port of a second communication device for the second communication device, facilitating downlink bandwidth load balancing across ports of a switch. FIG. 7 is a diagram of another embodiment of a communication method according to embodiments of this application. Refer to FIG. 7. The method includes the following steps.

701. A first communication device determines a bandwidth splitting ratio of each port of a second communication device.

For example, as shown in FIG. 2, the first communication device is a DU 1, and the second communication device is an RU 1. The RU 1 includes a port 1 and a port 2. The DU 1 determines that a bandwidth splitting ratio of the port 1 of the RU 1 is 30%, that is, the RU 1 sends 30% of data of the RU 1 through the port 1 of the RU 1 to a port 1 of the switch. The DU 1 determines that a bandwidth splitting ratio of the port 2 of the RU 1 is 70%, that is, the RU 1 sends 70% of data of the RU 1 through the port 2 of the RU 1 to a port 2 of the switch.

Descriptions are provided in this embodiment mainly by using an example in which the first communication device determines the bandwidth splitting ratio of each port of the second communication device. The same is true to a process of determining a bandwidth splitting ratio of each port of another second communication device. For details, refer to related descriptions in this embodiment. For example, as shown in FIG. 2, the DU 1 may determine that a bandwidth splitting ratio of a port 1 of an RU 2 is 0 and a bandwidth splitting ratio of a port 2 of the RU 2 is 100%. The DU 1 may determine that a bandwidth splitting ratio of a port 1 of an RU 3 is 0 and a bandwidth splitting ratio of a port 2 of the RU 3 is 100%.

In a possible implementation, the first communication device determines the bandwidth splitting ratio of each port of the second communication device based on one or more of service load of the second communication device, a connection relationship of the second communication device, available bandwidth of each port of a switch, and latency of different transmission paths between the second communication device and the switch, where the switch is directly connected to the first communication device.

The connection relationship of the second communication device includes a connection relationship between the switch and the second communication device and/or a connection relationship between the second communication device and another communication device. For example, as shown in FIG. 2, the second communication device is an RU 1, the another communication device includes an RU 2 and an RU 3. The connection relationship of the second communication device includes a connection relationship between the RU 1 and the RU 2 and a connection relationship between the RU 1 and the RU 3. For another example, as shown in FIG. 2, the second communication device is an RU 2, and the another communication device is an RU 1. The connection relationship of the second communication device includes a connection relationship between the RU 2 and the RU 1 and a connection relationship between the RU 2 and the switch. As shown in FIG. 2, the first communication device is a DU 1, and the available bandwidth of each port of the switch may include available bandwidth of a port 1 of the switch and available bandwidth of a port 2 of the switch. The second communication device is an RU 1, and the different transmission paths between the second communication device and the switch include transmission paths between the RU 1 and the switch, which are specifically a transmission path: the RU 1 -> an RU 2 -> the switch and a transmission path: the RU 1 -> an RU 3 -> the switch.

In actual application, in the eCPRI networking, if there are more communication devices, the first communication device may determine the bandwidth splitting ratio of each port of the second communication device based on service load and connection relationships of the more communication devices. Optionally, the first communication device further determines the bandwidth splitting ratio of each port of the second communication device based on service load of a third communication device and/or a connection relationship of the third communication device. The connection relationship of the third communication device includes a connection relationship between the third communication device and the switch and/or a connection relationship between the third communication device and the second communication device. For example, as shown in FIG. 2, the first communication device is a DU 1, the second communication device is an RU 1, and the third communication device is an RU 2. The connection relationship of the third communication device includes a connection relationship between the RU 2 and the switch and a connection relationship between the RU 2 and the RU 1.

For eCPRI networking shown in FIG. 2, the DU may determine a bandwidth splitting ratio of each port of the RU 1, a bandwidth splitting ratio of each port of the RU 2, and a bandwidth splitting ratio of each port of the RU 3 based on service load of the RU 1, a connection relationship of the RU 1, latency of different transmission paths between the RU 1 and the switch, service load of the RU 2, a connection relationship of the RU 2, latency of different transmission paths between the RU 2 and the switch, service load of the RU 3, a connection relationship of the RU 3, latency of different transmission paths between the RU 3 and the switch, and available bandwidth corresponding to each of a port 1 and a port 2 of the switch.

702. The first communication device sends the bandwidth splitting ratio of each port of the second communication device to the switch.

For example, as shown in FIG. 2, the first communication device is a DU 1, and the second communication device is an RU 1. The DU 1 sends a bandwidth splitting ratio of each port of the RU 1 to the RU 1 through the switch.

703. The switch sends data of the second communication device from the first communication device based on the bandwidth splitting ratio of each port of the second communication device.

For example, as shown in FIG. 2, the second communication device is an RU 2. The switch sends one part of the data of the RU 2 to a port 2 of the RU 2 through a port 1 of the switch based on a bandwidth splitting ratio of the port 2 of the RU 2, and sends the other part of the data of the RU 2 to a port 1 of the RU 2 through the switch, an RU 3, and an RU 1 based on a bandwidth splitting ratio of the port 1 of the RU 2.

Optionally, the switch sends the data of the second communication device from the first communication device through the third communication device based on the bandwidth splitting ratio of each port of the second communication device. For example, as shown in FIG. 2, the second communication device is an RU 1, and the third communication device includes an RU 2 and an RU 3. The switch sends one part of the data of the RU 1 to a port 1 of the RU 1 through the RU 2 based on a bandwidth splitting ratio of the port 1 of the RU 1, and sends the other part of the data of the RU 1 to a port 2 of the RU 1 through the RU 3 based on a bandwidth splitting ratio of the port 2 of the RU 1.

In this embodiment of this application, the first communication device determines the bandwidth splitting ratio of each port of the second communication device. Then, the first communication device sends the bandwidth splitting ratio of each port of the second communication device to the switch. Therefore, the switch sends the data of the second communication device from the first communication device to the second communication device based on the bandwidth splitting ratio of each port of the second communication device, thereby implementing multi-port transmission between the switch and the second communication device. This facilitates bandwidth load balancing across ports of the first communication device or the switch, and reduces communication latency.

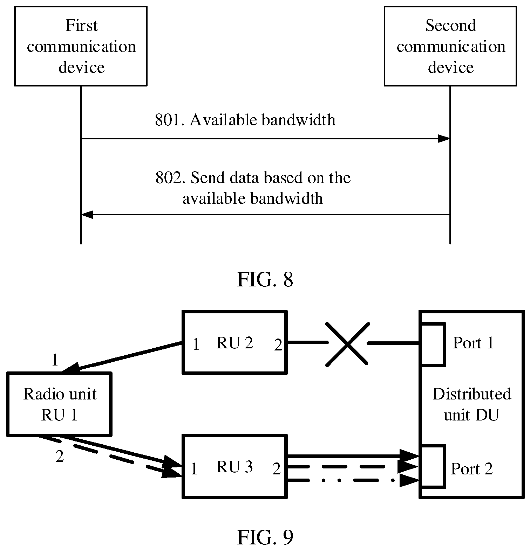

The following describes, with reference to an embodiment shown in FIG. 8, a process in which a first communication device configures available bandwidth for a second communication device and performs communication via the available bandwidth. FIG. 8 is a diagram of another embodiment of a communication method according to embodiments of this application. Refer to FIG. 8. The method includes the following steps.

801. A first communication device sends available bandwidth to a second communication device; and correspondingly, the second communication device receives the available bandwidth from the first communication device.

In a possible implementation, the available bandwidth is used for communication between the first communication device and the second communication device. For example, as shown in FIG. 4, the first communication device is a DU, and the second communication device is an RU 2. The DU may send available bandwidth to the RU 2, where the available bandwidth is used for communication between the RU 2 and the DU. In other words, the RU 2 may send data to the DU via the available bandwidth.

In another possible implementation, the available bandwidth is used for communication between the second communication device and a switch. For example, as shown in FIG. 2, the first communication device is a DU 1, and the second communication device is an RU 2. The DU may send available bandwidth to the RU 2 through the switch, where the available bandwidth is used for communication between the RU 2 and the switch, and then the switch forwards data of the RU 2 to the DU 1.

Optionally, the first communication device sends the available bandwidth to the second communication device through a third communication device and/or the switch. For example, as shown in FIG. 4, the first communication device is a DU, the second communication device is an RU 1, and the third communication device is an RU 2. The DU sends available bandwidth to the RU 1 through the RU 2. For another example, as shown in FIG. 2, the first communication device is a DU 1, and the second communication device is an RU 2. The DU sends available bandwidth to the RU 2 through a switch.

802. The second communication device sends data to the first communication device via the available bandwidth; and correspondingly, the first communication device receives the data from the second communication device.

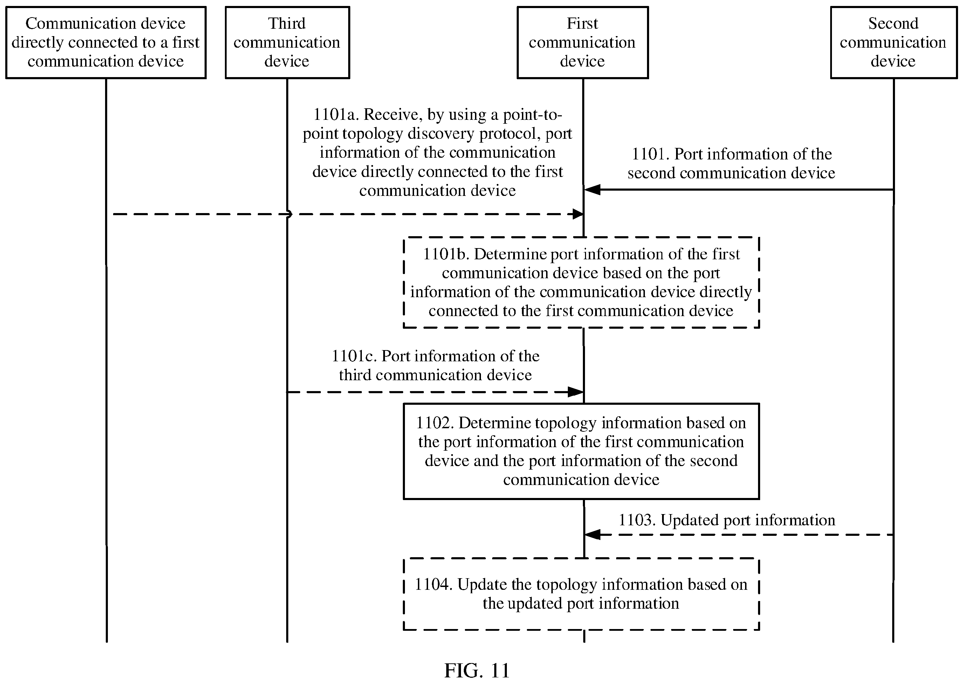

Optionally, the available bandwidth is available bandwidth of the second communication device when a first connection is broken. The first connection is a correspondingly broken connection between two communication devices in the eCPRI networking. The two communication devices may be a DU and an RU, two RUs, an RU and a switch, or a DU and a switch. For example, as shown in FIG. 9, when a connection between a port 2 of an RU 2 and a port 1 of a DU is broken, that is, a link fault occurs, because available bandwidth supported by a port of the DU is limited, the DU may allocate available bandwidth to each RU in eCPRI networking. Therefore, the RU 1, the RU 2, and the RU 3 send data to the DU respectively based on available bandwidth corresponding to the RU 1, the RU 2, and the RU 3. This ensures that each RU has available bandwidth, thereby preventing some RUs from experiencing insufficient available bandwidth and ensuring data transmission in each cell. Optionally, the first communication device may determine a faulty link in the eCPRI networking in a topology information determining process in the following embodiment shown in FIG. 11. For another example, as shown in FIG. 2, the first connection is a connection between a port 1 of the switch and a port 2 of the RU 2, the first communication device is a DU 1, and the second communication device is an RU 1. If the first connection is broken, the RU 1 sends data to the switch through an RU 3, and then the switch forwards the data to the DU 1.

Optionally, the second communication device sends the data to the first communication device through a third communication device and/or the switch via the available bandwidth. For example, as shown in FIG. 9, the first communication device is a DU, the second communication device is an RU 1, and the third communication device is an RU 3. The RU 1 sends data to the DU through the RU 3 based on available bandwidth of the RU 1. For another example, as shown in FIG. 2, the first connection is a connection between a port 1 of the switch and a port 2 of the RU 2, the first communication device is a DU 1, and the second communication device is an RU 1. If the first connection is broken, the RU 1 sends data to the DU 1 through the RU 3 and the switch.

It should be noted that descriptions are provided in the embodiment shown in FIG. 8 by using an example in which the first communication device allocates the available bandwidth to the second communication device and indicates the available bandwidth to the second communication device. In actual application, the same is true to an allocation process and an indication process of available bandwidth of another communication device. For details, refer to related descriptions in this embodiment.

In this embodiment of this application, the first communication device sends the available bandwidth to the second communication device; and the first communication device receives the data sent by the second communication device via the available bandwidth, so that communication between the first communication device and the second communication device is implemented. This avoids a case in which the second communication device has no corresponding bandwidth for use when a link fault occurs, thereby ensuring normal communication between communication devices in a link.

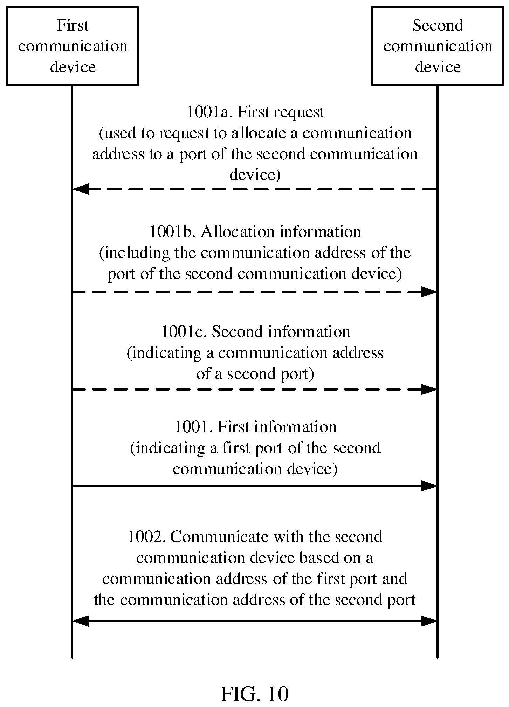

The following describes, with reference to an embodiment shown in FIG. 10, a process of establishing a communication link between a first communication device and a second communication device. FIG. 10 is a diagram of another embodiment of a communication method according to embodiments of this application. Refer to FIG. 10. The method includes the following steps.

1001. A first communication device sends first information to a second communication device, where the first information indicates a first port of the second communication device; and correspondingly, the second communication device receives the first information from the first communication device.

In a possible implementation, the first information indicates the second communication device to communicate with the first communication device through the first port. For example, as shown in FIG. 1, the first communication device is a DU, and the second communication device is an RU 2. The DU sends the first information to the RU 2, where the first information indicates a port 2 of the RU 2. That is, the DU indicates the RU 2 to communicate with the DU through a port 2.

In another possible implementation, the first information indicates the second communication device to communicate with a switch through the first port. For example, as shown in FIG. 2, the first communication device is a DU 1, and the second communication device is an RU 2. The DU 1 sends first information to the RU 2, where the first information indicates a port 2 of the RU 2. That is, the DU indicates the RU 2 to communicate with the switch through the port 2.

Optionally, the first information is carried in a broadcast packet.

Optionally, the first communication device sends the first information to the second communication device through a third communication device and/or the switch. For example, as shown in FIG. 1, the first communication device is a DU, the second communication device is an RU 1, and the third communication device is an RU 2. The DU sends the first information to the RU 1 through the RU 2. For another example, as shown in FIG. 2, the first communication device is a DU 1, the second communication device is an RU 1, and the third communication device is an RU 2. The DU 1 sends the first information to the RU 1 through the switch and the RU 2.

Optionally, the embodiment shown in FIG. 10 further includes step 1001a and step 1001b. Step 1001a and step 1001b may be performed before step 1001.

1001a. The second communication device sends a first request to the first communication device, where the first request is used to request to allocate a communication address to a port of the second communication device; and correspondingly, the second communication device receives the first request from the first communication device.

For example, as shown in FIG. 4, the first communication device is a DU, and the second communication device is an RU 1. The RU 1 sends the first request to the DU, to request the DU to allocate communication addresses to a port 1 and a port 2 of the RU 1.

Optionally, the communication address includes an internet protocol (internet protocol, IP) address. Optionally, the first request is carried in a broadcast packet.

Optionally, the second communication device sends the first request to the first communication device through a third communication device and/or the switch. For example, as shown in FIG. 1, the first communication device is a DU, and the second communication device is an RU 1. The RU 1 sends the first request to the DU through an RU 2. For another example, as shown in FIG. 2, the first communication device is a DU 1, and the second communication device is an RU 1. An RU 2 sends the first request to the DU 1 through the switch.

1001b. The first communication device sends allocation information to the second communication device, where the allocation information includes the communication address of the port of the second communication device; and correspondingly, the second communication device receives the allocation information from the first communication device.

For example, as shown in FIG. 1, the first communication device is a DU, and the second communication device is an RU 2. The DU sends the allocation information to the RU 2. For another example, as shown in FIG. 2, the first communication device is a DU 1, and the second communication device is an RU 2. The DU 1 sends the allocation information to the RU 2 through the switch, to indicate that the DU 1 allocates communication addresses to a port 1 and a port 2 of the RU 2.

Optionally, the allocation information is carried in a broadcast packet. Optionally, the communication address is an IP address.

Optionally, the first communication device sends the allocation information to the second communication device through a third communication device and/or the switch. For example, as shown in FIG. 1, the first communication device is a DU, and the second communication device is an RU 1. The DU sends the allocation information to the RU 1 through an RU 2. For another example, as shown in FIG. 2, the first communication device is a DU 1, and the second communication device is an RU 1. The DU 1 sends the allocation information to the RU 1 through the switch and an RU 2.

Optionally, the embodiment shown in FIG. 10 further includes step 1001c. Step 1001c may be performed before step 1001.

1001c. The first communication device sends second information to the second communication device, where the second information indicates a communication address of a second port; and correspondingly, the second communication device receives the second indication information from the first communication device.

In a possible implementation, the second information indicates that the first communication device communicates with the second communication device through the second port. For example, as shown in FIG. 1, the first communication device is a DU, and the second communication device is an RU 2. The DU sends the second information to the RU 2, to indicate, to the RU 2, that the DU communicates with the RU 2 through a port 1 of the DU.

In another possible implementation, the second information indicates that the switch communicates with the second communication device through the second port. For example, as shown in FIG. 2, the first communication device is a DU 1, and the second communication device is an RU 2. The DU 1 sends the second information to the RU 2 through the switch, to indicate, to the RU 2, that the switch communicates with the RU 2 through a port 1 of the switch.

Optionally, the second information is carried in a broadcast packet.

Optionally, the first communication device sends the second information to the second communication device through a third communication device and/or the switch. For example, as shown in FIG. 1, the first communication device is a DU, and the second communication device is an RU 1. The DU sends the second information to the RU 1 through an RU 2. For another example, as shown in FIG. 2, the first communication device is a DU 1, and the second communication device is an RU 1. The DU 1 sends the second information to the RU 1 through an RU 2 and the switch.

It should be noted that there is no fixed execution sequence between step 1001c and both step 1001a and step 1001b. Step 1001a and step 1001b may be performed before step 1001c; step 1001c may be performed before step 1001a and step 1001b; or steps 1001a and 1001b and step 1001c may be simultaneously performed based on a situation. This is not specifically limited in this application.

1002. The first communication device communicates with the second communication device based on a communication address of the first port and a communication address of the second port.

The second port is a port of the first communication device or a port of the switch. For example, as shown in FIG. 1, the first communication device is a DU, the second communication device is an RU 2, the first port is a port 2 of the RU 2, and the second port is a port 1 of the DU. The DU communicates with the port 2 of the RU 2 through the port 1 of the DU. For another example, as shown in FIG. 2, the first communication device is a DU 1, the second communication device is an RU 2, the first port is a port 2 of the RU 2, and the second port is a port 1 of the switch. The DU 1 communicates with the port 2 of the RU 2 through the port 1 of the switch.

Optionally, the first communication device communicates with the second communication device based on the communication address of the first port and the communication address of the second port. For example, as shown in FIG. 2, the first communication device is a DU 1, the second communication device is an RU 2, the first port is a port 2 of the RU 2, and the second port is a port 1 of the switch. The DU 1 communicates with the port 2 of the RU 2 through the port 1 of the switch.

In this embodiment of this application, the first communication device sends the first information to the second communication device, where the first information indicates a first port of the second communication device; and the first communication device communicates with the second communication device based on the communication address of the first port and the communication address of the second port. Therefore, a communication channel between the first communication device and the second communication device is established, to implement communication between the first communication device and the second communication device.

The following describes, with reference to an embodiment shown in FIG. 11, a process in which a first communication device determines topology information of eCPRI networking. FIG. 11 is a diagram of another embodiment of a communication method according to embodiments of this application. Refer to FIG. 11. The method includes the following steps.

1101. A second communication device sends port information of the second communication device to a first communication device; and correspondingly, the first communication device receives the port information from the second communication device.

Optionally, the port information of the second communication device includes at least one of the following: an identifier and a type of the second communication device, and an identifier and a port of a communication device connected to each port of the second communication device. For example, as shown in FIG. 1, the first communication device is a DU, and the second communication device is an RU 1. The RU 1 sends port information of the RU 1 to the DU. The port information of the RU 1 specifically includes an identifier of the RU 1, a type of the RU 1 being an RU, an identifier of an RU 2 connected to a port 1 of the RU 1, a port 1 of the connected RU 2, an identifier of an RU 3 connected to a port 2 of the RU 1, and a port 1 of the connected RU 3.

Optionally, the port information of the second communication device is carried in a broadcast packet.

Optionally, the second communication device sends the port information of the second communication device to the first communication device through a third communication device and/or the switch. For example, as shown in FIG. 1, the first communication device is a DU, the second communication device is an RU 1, and the third communication device is an RU 2. The RU 1 sends the port information of the RU 1 to the DU through the RU 2. For another example, as shown in FIG. 2, the first communication device is a DU 1, the second communication device is an RU 1, and the third communication device is an RU 2. The RU 1 sends the port information of the RU 1 to the DU 1 through the RU 2 and the switch. It should be noted that in actual application, the first communication device may send the port information of the second communication device to the first communication device through one or more third communication devices and/or the switch. This needs to be specifically determined based on a quantity of third communication devices included in a transmission path between the first communication device and the second communication device.

1102. The first communication device determines topology information based on port information of the first communication device and the port information of the second communication device.

Optionally, the port information of the first communication device includes at least one of the following: an identifier and a type of the first communication device, and an identifier and a port of a communication device connected to each port of the first communication device. For example, as shown in FIG. 1, the first communication device is a DU, and port information of the DU includes an identifier of the DU, a type of the DU being a DU, an identifier of an RU 2 connected to a port 1 of the DU, a port 1 of the connected RU 2, an identifier of an RU 3 connected to a port 2 of the DU, and a port 1 of the connected RU 3. For another example, as shown in FIG. 2, the first communication device is a DU 1, and port information of the DU 1 includes an identifier of the DU 1, a type of the DU 1 being a DU, an identifier of a switch connected to a port 1 of the DU 1, and a port 7 of the connected switch.

The topology information includes a connection relationship between the first communication device and the second communication device. For example, as shown in FIG. 1, the first communication device is a DU, the second communication device is an RU 1, and a connection relationship between the DU and the RU 1 includes: A port 1 of the DU is connected to a port 1 of the RU 1 through an RU 2, and a port 2 of the DU is connected to a port 2 of the RU 1 through an RU 3. For another example, as shown in FIG. 2, the first communication device is a DU, the second communication device is an RU 1, and a connection relationship between the DU and the RU 1 includes: A port of the DU 1 is connected to a port 1 of the RU 1 through an RU 2 and a switch, and a port of the DU 1 is connected to a port 2 of the RU 1 through an RU 3 and the switch.

It should be noted that descriptions are provided in step 1101 and step 1102 by using a process in which the first communication device determines the topology information based on the port information of the first communication device and the port information of the second communication device as an example. In actual application, the eCPRI networking may further include more communication devices, and the first communication device may determine the topology information based on port information of the more communication devices. This is not specifically limited in this application.

Optionally, the embodiment shown in FIG. 11 further includes step 1101a and step 1101b. Step 1101a and step 1101b may be performed before step 1102.

1101a. The first communication device receives, by using a point-to-point topology discovery protocol, port information of a communication device directly connected to the first communication device.

Optionally, the port information of the communication device directly connected to the first communication device includes at least one of the following: an identifier and a type of the communication device directly connected to the first communication device, and a port that is of the communication device directly connected to the first communication device and that is connected to the first communication device. For example, as shown in FIG. 1, the first communication device is a DU, and the communication device directly connected to the first communication device includes an RU 2 and an RU 3. The DU receives, by using the point-to-point topology discovery protocol, port information corresponding to each of the RU 2 and the RU 3. For example, the port information of the RU 2 includes an identifier of the RU 2, a type of the RU 2 being an RU, and a port 2 of the RU 2 being connected to a port 1 of the DU. The port information of the RU 3 includes an identifier of the RU 3, a type of the RU 3 being an RU, and a port 2 of the RU 3 being connected to a port 2 of the DU.

Optionally, the communication device directly connected to the first communication device includes a switch. For example, as shown in FIG. 2, port information of the switch includes an identifier of the switch and a port 7 of the switch being connected to a port of the DU 1.

1101b. The first communication device determines port information of the first communication device based on the port information of the communication device directly connected to the first communication device.

For example, as shown in FIG. 1, the first communication device is a DU, and the communication device directly connected to the first communication device includes an RU 2 and an RU 3. The DU receives, by using the point-to-point topology discovery protocol, port information corresponding to each of the RU 2 and the RU 3. The DU determines port information of the DU based on the port information corresponding to each of the RU 2 and the RU 3. The port information of the DU includes an identifier of the DU, a type of the DU being a DU, an identifier of an RU 2 connected to a port 1 of the DU, a port 1 of the connected RU 2, an identifier of an RU 3 connected to a port 2 of the DU, and a port 1 of the connected RU 3.

For another example, as shown in FIG. 2, the first communication device is a DU 1, and the communication device directly connected to the first communication device includes a switch. The DU 1 receives port information from the switch by using the point-to-point topology discovery protocol. The DU 1 determines port information of the DU 1 based on the port information of the switch. The port information of the DU 1 includes an identifier of the DU 1, a type of the DU 1 being a DU, and a port of the DU 1 being connected to a port 7 of the switch.

Optionally, the eCPRI networking may further include more communication devices, and the first communication device may determine the topology information based on port information of the more communication devices. This is not specifically limited in this application. Optionally, the embodiment shown in FIG. 11 further includes step 1101c. Step 1101c may be performed before step 1102.

The first communication device does not broadcast the port information of the first communication device.

1101c. The third communication device sends port information of the third communication device to the first communication device; and correspondingly, the first communication device receives the port information from the third communication device.

Optionally, step 1102 specifically includes: The first communication device determines the topology information based on the port information of the first communication device, the port information of the second communication device, and the port information of the third communication device.

It should be noted that there is no fixed execution sequence between step 1101c and both step 1101a and step 1101b. Step 1101a and step 1101b may be performed before step 1101c; step 1101c may be performed before step 1101a and step 1101b; or steps 1101a and 1101b and step 1101c may be simultaneously performed based on a situation. This is not specifically limited in this application.

Optionally, the embodiment shown in FIG. 11 further includes step 1103 and step 1104. Step 1103 and step 1104 may be performed after step 1102.

1103. The second communication device sends updated port information of the second communication device to the first communication device; and correspondingly, the first communication device receives the updated port information from the second communication device.

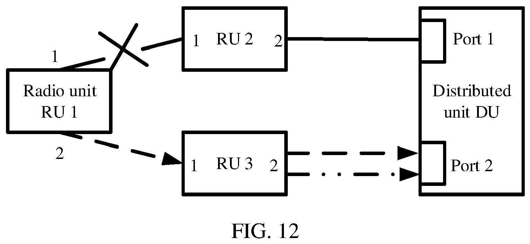

The updated port information is port information of the second communication device obtained through an update. For example, the second communication device may receive, by using the point-to-point topology discovery protocol, the port information of the communication device directly connected to the second communication device. When the port information of the communication device directly connected to the second communication device changes, the second communication device may determine the updated port information. For example, as shown in FIG. 12, the second communication device is an RU 1. The RU 1 determines, by using the point-to-point topology discovery protocol, that a connection between a port 1 of the RU 1 and a port 1 of an RU 2 is broken. In this case, the RU 1 may determine updated port information of the RU 1. The updated port information includes an identifier of the RU 1, a type of the RU 1, an identifier of an RU 3 connected to the RU 1, and a port 2 of the RU 1 being connected to a port 1 of the RU 3.

1104. The first communication device updates the topology information based on the updated port information.

For example, as shown in FIG. 12, the first communication device is a DU, and the second communication device is an RU 1. The DU may determine that the RU 1 is disconnected from an RU 2. The topology information includes a connection relationship between the DU and the RU 1, and the connection relationship between the DU and the RU 1 includes: A port 2 of the DU is connected to a port 2 of the RU 1 through an RU 3.

It should be noted that descriptions are provided in step 1103 and step 1104 by using a process in which the second communication device updates the port information of the second communication device as an example. In actual application, the eCPRI networking may further include more communication devices. When port information of the more communication devices is updated, the first communication device may further determine the topology information based on updated port information of the more communication devices. This is not specifically limited in this application.

In this embodiment of this application, the first communication device receives the port information from the second communication device; and then, the first communication device determines the topology information based on the port information of the first communication device and the port information of the second communication device. Therefore, the first communication device communicates with the second communication device based on the topology information. Further, the first communication device may further update the topology information based on an actual situation, to avoid a case in which the first communication device cannot normally communicate with the second communication device when a link fault occurs, thereby improving communication performance.

It should be noted that descriptions are provided in FIG. 12 by using an example in which the first communication device and the second communication device are two communication devices that are not directly connected. In actual application, when the first communication device is directly connected to another communication device in the eCPRI networking, the first communication device may obtain, by using the topology discovery protocol, port information of each communication device directly connected to the first communication device, and determine the topology information based on the port information of each communication device directly connected to the first communication device. This is not specifically limited in this application.

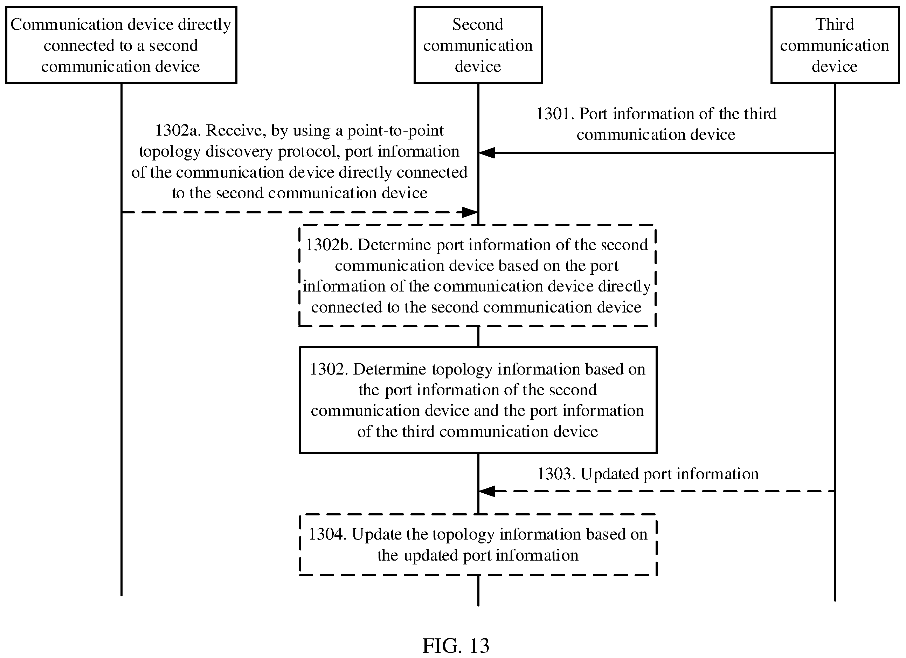

The following describes, with reference to an embodiment shown in FIG. 13, a process in which a third communication device determines topology information of eCPRI networking. FIG. 13 is a diagram of another embodiment of a communication method according to embodiments of this application. Refer to FIG. 13. The method includes the following steps.

1301. A third communication device sends port information of the third communication device to a second communication device; and correspondingly, the second communication device receives the port information from the third communication device.

1302. The second communication device determines topology information based on port information of the second communication device and the port information of the third communication device.

Step 1301 and step 1302 are similar to step 1101 and step 1102 in the embodiment shown in FIG. 11. For details, refer to related descriptions of step 1101 and step 1102 in the embodiment shown in FIG. 11.

Optionally, the embodiment shown in FIG. 13 further includes step 1302a and step 1302b. Step 1302a and step 1302b may be performed before step 1302.

1302a. The second communication device receives, by using a point-to-point topology discovery protocol, port information of a communication device directly connected to the second communication device.

1302b. The second communication device determines port information of the second communication device based on the port information of the communication device directly connected to the second communication device.

Step 1302a and step 1302b are similar to step 1101a and step 1101b in the embodiment shown in FIG. 11. For details, refer to related descriptions of step 1101a and step 1101b in the embodiment shown in FIG. 11.

Optionally, the embodiment shown in FIG. 13 further includes step 1303 and step 1304, and step 1303 and step 1304 may be performed after step 1302.

1303. The third communication device sends updated port information of the third communication device to the second communication device; and correspondingly, the second communication device receives the updated port information from the third communication device.

1304. The second communication device updates the topology information based on the updated port information.

Step 1303 and step 1304 are similar to step 1103 and step 1104 in the embodiment shown in FIG. 11. For details, refer to related descriptions of step 1103 and step 1104 in the embodiment shown in FIG. 11.

It should be noted that descriptions are provided in FIG. 13 by using an example in which the second communication device and the third communication device are two communication devices that are not directly connected. In actual application, when the second communication device is directly connected to another communication device in the eCPRI networking, the second communication device may obtain, by using the topology discovery protocol, port information of each communication device directly connected to the second communication device, and determine the topology information based on the port information of each communication device directly connected to the second communication device. This is not specifically limited in this application.

It should be noted that in the eCPRI networking, clocks of RUs need to be synchronized. In a possible implementation, the RU uses a port close to a DU side as a secondary port by default, the other port of the RU is a primary port, and the RU transmits a clock of the RU to a neighboring RU through the primary port. If ports of two directly connected RUs are all primary ports, the two RUs do not transmit a clock.

It should be noted that the foregoing embodiments may be combined with each other, or may be separately implemented. This is not specifically limited in this application. For example, the embodiment shown in FIG. 3 may be combined with the embodiment shown in FIG. 8. Optionally, step 801 and step 802 in the embodiment shown in FIG. 8 may be performed after step 301 and step 303 in the embodiment shown in FIG. 3. For another example, the embodiment shown in FIG. 3 may be combined with the embodiment shown in FIG. 11. The first communication device may determine the topology information by using the embodiment shown in FIG. 11, and then perform the embodiment shown in FIG. 3. For another example, the embodiment shown in FIG. 8 may be combined with the embodiment shown in FIG. 11. The first communication device may determine the topology information by using the embodiment shown in FIG. 11, and then perform the embodiment shown in FIG. 8. For another example, the embodiment shown in FIG. 5 may be combined with the embodiment shown in FIG. 11. The first communication device may determine the topology information by using the embodiment shown in FIG. 11, and then perform the embodiment shown in FIG. 11.

The following describes communication apparatuses provided in embodiments of this application.

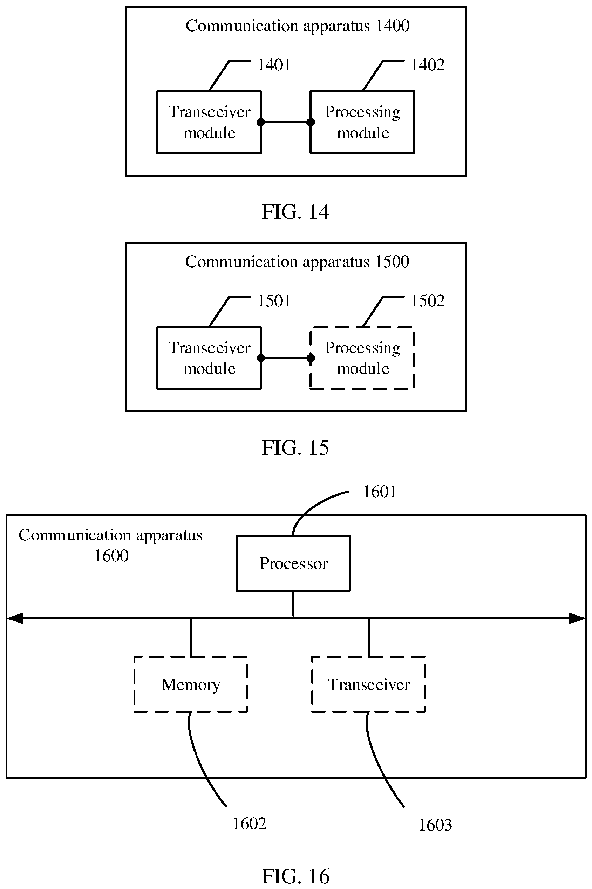

FIG. 14 is a diagram of a structure of a communication apparatus according to an embodiment of this application. Refer to FIG. 14. The communication apparatus 1400 may be configured to perform a process performed by the first communication device in the embodiment shown in FIG. 3, configured to perform a process performed by the first communication device in the embodiment shown in FIG. 5, configured to perform a process performed by the first communication device in the embodiment shown in FIG. 7, configured to perform a process performed by the first communication device or the second communication device in the embodiment shown in FIG. 10, configured to perform a process performed by the first communication device in the embodiment shown in FIG. 11, or configured to perform a process performed by the second communication device in the embodiment shown in FIG. 13. For details, refer to related descriptions in the foregoing method embodiments.

The communication apparatus 1400 includes a transceiver module 1401 and a processing module 1402.

The processing module 1402 is configured to process data. The transceiver module 1401 may implement a corresponding communication function. The transceiver module 1401 may also be referred to as a communication interface or a communication module.

Optionally, the communication apparatus 1400 may further include a storage module. The storage module may be configured to store instructions and/or data. The processing module 1402 may read the instructions and/or the data in the storage module, to enable the communication apparatus to implement the foregoing method embodiments.

In a possible implementation, the communication apparatus 1400 may be configured to perform actions performed by the first communication device in the embodiment shown in each of FIG. 3, FIG. 5, FIG. 7, FIG. 10, and FIG. 11. The communication apparatus 1400 may be a first communication device or a component that can be configured in the first communication device. The processing module 1402 is configured to perform a processing-related operation on a first communication device side in the embodiment shown in each of FIG. 3, FIG. 5, FIG. 7, FIG. 10, and FIG. 11. The transceiver module 1401 is configured to perform a receiving-related operation on a first communication device side in the embodiment shown in each of FIG. 3, FIG. 5, FIG. 7, FIG. 10, and FIG. 11.

For example, the communication apparatus 1400 is configured to perform the following solution.

The processing module 1402 is configured to determine a bandwidth splitting ratio of each port of a second communication device. The transceiver module 1401 is configured to: send first indication information, where the first indication information includes the bandwidth splitting ratio of each port; and receive traffic-split data from the second communication device.

For another example, the communication apparatus 1400 is configured to perform the following solution.

The processing module 1402 is configured to determine a bandwidth splitting ratio of each port of a second communication device. The transceiver module 1401 is configured to send traffic-split data to the second communication device based on the bandwidth splitting ratio of each port of the second communication device.

For another example, the communication apparatus 1400 is configured to perform the following solution.

The processing module 1402 is configured to determine a bandwidth splitting ratio of each port of a second communication device. The transceiver module 1401 is configured to send the bandwidth splitting ratio of each port to a switch, where the communication apparatus is directly connected to the switch.

For another example, the communication apparatus 1400 is configured to perform the following solution.

The transceiver module 1401 is configured to send first information to a second communication device, where the first information indicates a first port of the second communication device, and the first port is a port of the second communication device selected by the communication apparatus 1400 to communicate with the communication apparatus 1400. The processing module 1402 is configured to communicate with the second communication device based on a communication address of the first port and a communication address of a second port of the communication apparatus 1400.

For another example, the communication apparatus 1400 is configured to perform the following solution.

The transceiver module 1401 is configured to receive port information of the second communication device. The processing module 1402 is configured to determine topology information based on port information of the communication apparatus 1400 and the port information of the second communication device, where the topology information includes a connection relationship between the communication apparatus 1400 and the second communication device.

In another possible implementation, the communication apparatus 1400 may be configured to perform actions performed by the second communication device in the embodiment shown in each of FIG. 10 and FIG. 13. The communication apparatus 1400 may be a second communication device or a component that can be configured in the second communication device. The processing module 702 is configured to perform a processing-related operation on a second communication device side in the embodiment shown in each of FIG. 10 and FIG. 13. The transceiver module 1401 is configured to perform a receiving-related operation on a second communication device side in the embodiment shown in each of FIG. 10 and FIG. 13.

For example, the communication apparatus 1400 is configured to perform the following solution.

The transceiver module 1401 is configured to receive first information from a first communication device, where the first information indicates a first port of the communication apparatus 1400, and the first port is a port of the communication apparatus 1400 selected by the first communication device to communicate with the first communication device. The processing module 1402 is configured to communicate with the first communication device based on a communication address of the first port and a communication address of a second port of the first communication device.

For another example, the communication apparatus 1400 is configured to perform the following solution.

The transceiver module 1401 is configured to receive port information of a third communication device. The processing module 1402 is configured to determine topology information based on port information of the communication apparatus 1400 and the port information of the third communication device, where the topology information includes a connection relationship between the communication apparatus 1400 and the third communication device.

It should be noted that the communication apparatus 1400 may include a sending module, but does not include a receiving module. Alternatively, the communication apparatus 1400 may include a receiving module, but does not include a sending module. This may specifically depend on whether the foregoing solution performed by the communication apparatus 1400 includes a sending action and a receiving action.

Optionally, the communication apparatus 1400 is configured to perform actions performed by the first communication device or the second communication device in the foregoing related embodiments. For details, refer to related descriptions in the foregoing related embodiments. The details are not described herein again.

It should be understood that a specific process in which the modules perform the foregoing corresponding process has been described in detail in the foregoing method embodiments. For brevity, details are not described herein again.

The processing module 1402 in the foregoing embodiment may be implemented by at least one processor or a processor-related circuit. The transceiver module 1401 may be implemented by a transceiver or a transceiver-related circuit. The transceiver module 1401 may also be referred to as a communication module or a communication interface. The storage module may be implemented by at least one memory.

FIG. 15 is a diagram of another structure of a communication apparatus according to an embodiment of this application. Refer to FIG. 15. The communication apparatus 1500 may be configured to perform a process performed by the second communication device in the embodiment shown in FIG. 3, or may be configured to perform a process performed by the switch in the embodiment shown in FIG. 7. For details, refer to related descriptions in the foregoing method embodiments.

The communication apparatus 1500 includes a transceiver module 1501. Optionally, the communication apparatus 1500 further includes a processing module 1502.

The processing module 1502 is configured to process data. The transceiver module 1501 may implement a corresponding communication function. The transceiver module 1501 may also be referred to as a communication interface or a communication module.

Optionally, the communication apparatus 1500 may further include a storage module. The storage module may be configured to store instructions and/or data. The processing module 1502 may read the instructions and/or the data in the storage module, to enable the communication apparatus to implement the foregoing method embodiments.

In a possible implementation, the communication apparatus 1500 may be configured to perform actions performed by the second communication device in the embodiment shown in FIG. 3. The communication apparatus 1500 may be a second communication device or a component that can be configured in the second communication device. The processing module 1502 is configured to perform a processing-related operation on a second communication device side in the embodiment shown in FIG. 3. The transceiver module 1501 is configured to perform a receiving-related operation on a second communication device side in the embodiment shown in FIG. 3.

For example, the communication apparatus 1500 is configured to perform the following solution.

The transceiver module 1501 is configured to: receive first indication information, where the first indication information includes a bandwidth splitting ratio of each port of the communication apparatus 1500; and send traffic-split data to a first communication device based on the bandwidth splitting ratio of each port of the communication apparatus 1500.

For another example, the communication apparatus 1500 is configured to perform the following solution.

The transceiver module 1501 is configured to: receive a bandwidth splitting ratio of each port of the second communication device from a first communication device, and send data of the second communication device from the first communication device to the second communication device based on the bandwidth splitting ratio of each port of the second communication device.

It should be noted that the communication apparatus 1500 may include a sending module, but does not include a receiving module. Alternatively, the communication apparatus 1500 may include a receiving module, but does not include a sending module. This may specifically depend on whether the foregoing solution performed by the communication apparatus 1500 includes a sending action and a receiving action.

Optionally, the communication apparatus 1500 is configured to perform actions performed by the second communication device or the switch in the foregoing related embodiments. For details, refer to related descriptions in the foregoing related embodiments. The details are not described herein again.

It should be understood that a specific process in which the modules perform the foregoing corresponding process has been described in detail in the foregoing method embodiments. For brevity, details are not described herein again.

The processing module 1502 in the foregoing embodiment may be implemented by at least one processor or a processor-related circuit. The transceiver module 1501 may be implemented by a transceiver or a transceiver-related circuit. The transceiver module 1501 may also be referred to as a communication module or a communication interface. The storage module may be implemented by at least one memory.

This application further provides another communication apparatus. FIG. 16 is a diagram of another structure of a communication apparatus according to an embodiment of this application. Refer to FIG. 16. The communication apparatus 1600 includes a processor 1601.

Optionally, the communication apparatus 1600 further includes a memory 1602.

Optionally, the communication apparatus 1600 further includes a transceiver 1603.

In a possible implementation, the processor 1601, the memory 1602, and the transceiver 1603 are separately connected through a bus, and the memory 1602 stores computer instructions.

In a possible implementation, when the communication apparatus 1600 includes a first communication device, or a component (for example, a chip), a module, or a unit in the first communication device, the communication apparatus 1600 may be configured to perform the steps performed by the first communication device in the foregoing method embodiments. For details, refer to related descriptions in the foregoing method embodiments.

In another possible implementation, when the communication apparatus 1600 includes a second communication device, a third communication device, or a switch, or a component (for example, a chip), a module, or a unit in the second communication device, the third communication device, or the switch, the communication apparatus 1600 may be configured to perform the steps performed by the second communication device, the third communication device, or the switch in the foregoing method embodiments. For details, refer to related descriptions in the foregoing method embodiments.

This application further provides a communication apparatus 1700. The communication apparatus 1700 may be a first communication device, a second communication device, or a third communication device, or the communication apparatus 1700 may be a chip. The communication apparatus 1700 may be configured to perform operations performed by the first communication device, the second communication device, or the third communication device in the foregoing method embodiments.

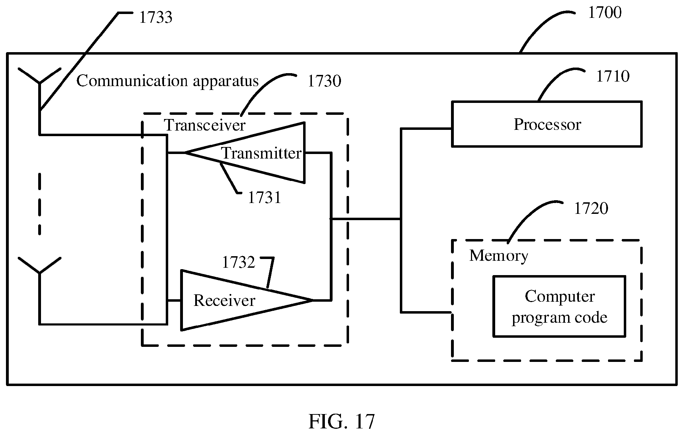

FIG. 17 is a diagram of another structure of a communication apparatus according to an embodiment of this application. The communication apparatus 1700 includes a part 1710. Optionally, the communication apparatus 1700 further includes a part 1720. Optionally, the communication apparatus 1700 further includes a part 1730.

The part 1710 is mainly configured to: perform baseband processing, control the communication apparatus 1700, and the like. The part 1710 is usually a control center of the communication apparatus 1700, may be usually referred to as a processor, and is configured to control the communication apparatus 1700 to perform a processing operation on a first communication device side, a second communication device side, or a third communication device side in the foregoing method embodiments.

The part 1720 is mainly configured to store computer program code and data.

The part 1730 is mainly configured to: receive and send a radio frequency signal, and perform conversion between the radio frequency signal and a baseband signal. The part 1730 may be usually referred to as a transceiver module, a transceiver machine, a transceiver circuit, a transceiver, or the like. A transceiver module in the part 1730 may also be referred to as a transceiver machine, a transceiver, or the like, and includes an antenna 1733 and a radio frequency circuit (not shown in the figure). The radio frequency circuit is mainly configured to perform radio frequency processing. Optionally, in the part 1730, a component for implementing a receiving function may be considered as a receiver, and a component for implementing a sending function may be considered as a transmitter. In other words, the part 1730 includes a receiver 1732 and a transmitter 1731. The receiver may also be referred to as a receiving module, a receiver device, a receiver circuit, or the like. The transmitter may be referred to as a transmitting module, a transmitter device, a transmitter circuit, or the like.

The part 1710 and the part 1720 may include one or more boards, and each board may include one or more processors and one or more memories. The processor is configured to: read and execute a program in the memory to implement a baseband processing function and control over the communication apparatus 1700. If there are a plurality of boards, the boards may be interconnected with each other, to enhance a processing capability. In an optional implementation, a plurality of boards may share one or more processors, a plurality of boards share one or more memories, or a plurality of boards share one or more processors at the same time.

For example, in an implementation, the transceiver module in the part 1730 is configured to perform a receiving/sending-related process performed by the first communication device, the second communication device, or the third communication device in the foregoing method embodiments. The processor in the part 1710 is configured to perform a processing-related process performed by the first communication device, the second communication device, or the third communication device in the foregoing method embodiments.

It should be understood that FIG. 17 is merely an example rather than a limitation, and the communication apparatus including the processor, the memory, and the transceiver may not depend on the structure shown in FIG. 14, FIG. 15, or FIG. 17.

When the communication apparatus 1700 is a chip, the chip includes a transceiver, a memory, and a processor. The transceiver may be an input/output circuit or a communication interface. The processor is a processor, a microprocessor, or an integrated circuit integrated on the chip. A sending operation of the first communication device, the second communication device, or the third communication device in the foregoing method embodiments may be understood as an output of the chip, and a receiving operation of the first communication device, the second communication device, or the third communication device in the foregoing method embodiments may be understood as an input of the chip.

An embodiment of this application further provides a computer-readable storage medium. The computer-readable storage medium stores computer instructions used to implement the method performed by the first communication device, the second communication device, the third communication device, or the switch in the foregoing method embodiments.

For example, when the computer program is executed by a computer, the computer is enabled to implement the method performed by the first communication device, the second communication device, the third communication device, or the switch in the foregoing method embodiments.

An embodiment of this application further provides a computer program product including instructions. When the instructions are executed by a computer, the computer is enabled to implement the method performed by the first communication device, the second communication device, the third communication device, or the switch in the foregoing method embodiments.

An embodiment of this application further provides a communication system. The communication system includes a first communication device and a second communication device. The first communication device is configured to perform some or all operations performed by the first communication device in the foregoing embodiments, and the second communication device is configured to perform some or all operations performed by the second communication device in the foregoing embodiments. Optionally, the communication system further includes a third communication device. The third communication device is configured to perform some or all operations performed by the third communication device in the foregoing embodiments. Optionally, the communication system further includes a switch. The switch is configured to perform some or all operations performed by the switch in the foregoing embodiments.

An embodiment of this application further provides a chip apparatus, including a processor, configured to invoke a computer program or computer instructions stored in a memory, to enable the processor to perform the methods provided in the embodiments shown in FIG. 3, FIG. 5, FIG. 7, FIG. 8, FIG. 10, FIG. 11, and FIG. 13.

In a possible implementation, an input of the chip apparatus corresponds to a receiving operation in any one of the embodiments shown in FIG. 3, FIG. 5, FIG. 7, FIG. 8, FIG. 10, FIG. 11, and FIG. 13, and an output of the chip apparatus corresponds to a sending operation in any one of the embodiments shown in FIG. 3, FIG. 5, FIG. 7, FIG. 8, FIG. 10, FIG. 11, and FIG. 13.

Optionally, the processor is coupled to the memory through an interface.

Optionally, the chip apparatus further includes the memory, and the memory stores the computer program or the computer instructions.

The processor mentioned in any one of the foregoing descriptions may be a general-purpose central processing unit, a microprocessor, an application-specific integrated circuit (application-specific integrated circuit, ASIC), or one or more integrated circuits configured to control program execution of the method provided in any one of the embodiments shown in FIG. 3, FIG. 5, FIG. 7, FIG. 8, FIG. 10, FIG. 11, and FIG. 13. The memory mentioned in any one of the foregoing descriptions may be a read-only memory (read-only memory, ROM), another type of static storage device that can store static information and instructions, a random access memory (random access memory, RAM), or the like.

It may be clearly understood by a person skilled in the art that for convenience and brevity of description, for explanation and beneficial effect of related content in any one of the apparatuses provided above, reference may be made to the foregoing corresponding method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, and may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in a form of a software functional unit and sold or used as an independent product, the integrated unit may be stored in a computer-readable storage medium. Based on such an understanding, the technical solutions in this application essentially, the part contributing, or all or a part of the technical solutions may be implemented in a form of a software product. The computer software product is stored in a storage medium, and includes several instructions for instructing a computer device (which may be a personal computer, a server, a network device, or the like) to perform all or a part of steps of the methods described in embodiments of this application. The foregoing storage medium includes any medium that can store program code, such as a USB flash drive, a removable hard disk, a ROM, a RAM, a magnetic disk, or an optical disc.

In conclusion, the foregoing embodiments are merely intended for describing the technical solutions of this application, but not for limiting the technical solutions of this application. Although this application is described in detail with reference to the foregoing embodiments, a person of ordinary skill in the art should understand that modifications to the technical solutions recorded in the foregoing embodiments or equivalent replacements to some technical features thereof may still be made, without departing from the scope of the technical solutions of embodiments of this application.

## Claims

1. A communication method, wherein the method is applied to a first communication device, and the method comprises:
determining a bandwidth splitting ratio of each port of a second communication device;
sending first indication information, wherein the first indication information comprises the bandwidth splitting ratio of each port; and
receiving traffic-split data from the second communication device.

2. The method according to claim 1, wherein the determining the bandwidth splitting ratio of each port of the second communication device comprises:
determining the bandwidth splitting ratio of each port based on one or more of service load of the second communication device, a connection relationship of the second communication device, available bandwidth of each port of the first communication device, and latency of different transmission paths between the second communication device and the first communication device; or
determining the bandwidth splitting ratio of each port based on one or more of service load of the second communication device, a connection relationship of the second communication device, available bandwidth of each port of a switch, and latency of different transmission paths between the second communication device and the switch, wherein the switch is directly connected to the first communication device.

3. The method according to claim 2, wherein the method further comprises:
further determining the bandwidth splitting ratio of each port based on service load of a third communication device and/or a connection relationship of the third communication device.

4. The method according to any one of claims 1 to 3, wherein the method further comprises:
sending available bandwidth, wherein the available bandwidth is available bandwidth between the first communication device and the second communication device.

5. The method according to claim 4, wherein the method further comprises:
receiving data from the second communication device via the available bandwidth.

6. The method according to any one of claims 1 to 5, wherein the receiving the traffic-split data from the second communication device comprises:
receiving the traffic-split data from the second communication device through the third communication device.

7. The method according to any one of claims 1 to 6, wherein the method further comprises:
receiving port information of the second communication device; and
determining topology information based on port information of the first communication device and the port information of the second communication device, wherein the topology information comprises a connection relationship between the first communication device and the second communication device.

8. The method according to claim 7, wherein the method further comprises:
receiving port information of the third communication device; and
the determining the topology information based on the port information of the first communication device and the port information of the second communication device comprises:
determining the topology information based on the port information of the first communication device, the port information of the second communication device, and the port information of the third communication device, wherein the topology information comprises respective connection relationships between the first communication device and the second communication device, between the first communication device and the third communication device, and between the second communication device and the third communication device.

9. The method according to claim 7 or 8, wherein the method further comprises:
receiving updated port information of the second communication device, wherein the updated port information is port information of the second communication device obtained through an update; and
updating the topology information based on the updated port information of the second communication device.

10. A communication method, wherein the method is applied to a second communication device, and the method comprises:
receiving first indication information, wherein the first indication information comprises a bandwidth splitting ratio of each port of the second communication device; and
sending traffic-split data to a first communication device based on the bandwidth splitting ratio of each port of the second communication device.

11. The method according to claim 10, wherein the method further comprises:
receiving available bandwidth, wherein the available bandwidth is available bandwidth between the first communication device and the second communication device.

12. The method according to claim 11, wherein the method further comprises:
sending data to the first communication device via the available bandwidth.

13. The method according to any one of claims 10 to 12, wherein the method further comprises:
sending port information of the second communication device.

14. The method according to any one of claims 10 to 13, wherein the sending the traffic-split data to the first communication device based on the bandwidth splitting ratio of each port of the second communication device comprises:
sending the traffic-split data to the first communication device through a third communication device based on the bandwidth splitting ratio of each port of the second communication device.

15. The method according to claim 14, wherein the method further comprises:
receiving port information of the third communication device; and
determining topology information based on the port information of the second communication device and the port information of the third communication device, wherein the topology information comprises a connection relationship between the second communication device and the third communication device.

16. A communication apparatus, wherein the communication apparatus comprises a transceiver module and a processing module, the transceiver module is configured to perform receiving and sending operations in the method according to any one of claims 1 to 9, and the processing module is configured to perform a processing operation in the method according to any one of claims 1 to 9.

17. A communication apparatus, wherein the communication apparatus comprises a transceiver module, and the transceiver module is configured to perform receiving and sending operations in the method according to any one of claims 10 to 15.

18. The communication apparatus according to claim 17, wherein the communication apparatus further comprises a processing module, and the processing module is configured to perform a processing operation in the method according to any one of claims 10 to 15.

19. A communication apparatus, wherein the communication apparatus comprises a processor, and the processor is configured to execute a computer program or computer instructions in a memory, to perform the method according to any one of claims 1 to 15.

20. A computer-readable storage medium, wherein the computer-readable storage medium stores a computer program, and when the computer program is executed by a communication apparatus, the communication apparatus is enabled to perform the method according to any one of claims 1 to 15.

21. A communication system, wherein the communication system comprises a first communication device and a second communication device, the first communication device is configured to perform the method according to any one of claims 1 to 9, and the second communication device is configured to perform the method according to any one of claims 10 to 15.
